# EUROPÄISCHE PATENTSCHRIFT

(11) **EP 1 725 355 B1**
(45) Veröffentlichungstag und Bekanntmachung des Hinweises auf die Patenterteilung: **25.09.2013**
(21) Anmeldenummer: 05733717.2
(22) Anmeldetag: 13.04.2005
(51) Int. Cl.: B21K 1/70, F16B 37/06, B21K 1/68

(54) **VERFAHREN ZUR HERSTELLUNG VON HOHLKÖRPERELEMENTEN, HOHLKÖRPERELEMENT SOWIE FOLGEVERBUNDWERKZEUG**
METHOD FOR THE PRODUCTION OF HOLLOW ELEMENTS, HOLLOW ELEMENT AND PROGRESSIVE COMPOSITE TOOL
PROCEDE DE PRODUCTION D'ELEMENTS A CORPS CREUX, ELEMENT A CORPS CREUX CORRESPONDANT ET OUTIL COMPOSITE PROGRESSIF

(30) Priorität: 13.04.2004 DE 102004017866
(43) Veröffentlichungstag der Anmeldung: 29.11.2006
(60) Teilanmeldung: 11007027.3
(73) Patentinhaber: PROFIL Verbindungstechnik GmbH & Co. KG, 61381 Friedrichsdorf (DE)
(72) Erfinder: BABEJ, Jiri, 35423 Lich (DE); VIETH, Michael, 61118 Bad Vilbel (DE); HUMPERT, Richard, 61191 Rosbach v.d.H. (DE)
(74) Vertreter: Morgan, James Garnet
(86) Internationale Anmeldenummer: PCT/EP2005/003893
(87) Internationale Veröffentlichungsnummer: WO 2005/099930

(56) Entgegenhaltungen:
- EP-A- 0 663 247
- WO-A-01/28723
- US-A- 3 775 791
- US-A1- 2004 042 870

## Beschreibung

Die vorliegende Erfindung betrifft ein Verfahren gemäß Anspruch 1 zur Herstellung von Hohlkörperelementen, wie Mutterelemente, zur Anbringung an üblicherweise aus Blech bestehenden Bauteilen, insbesondere zur Herstellung von Hohlkörperelementen mit einem zumindest im Wesentlichen quadratischen oder rechteckigen Außenumriss, durch Ablängung einzelner Elemente von einem in Form einer Profilstange oder eines Wickels vorliegenden Profil nach vorheriger Stanzung von Löchern in das Profil, gegebenenfalls mit anschließender Ausbildung eines Gewindezylinders unter Anwendung eines Folgeverbundwerkzeugs mit mehreren Arbeitsstationen, in denen jeweilige Bearbeitungen durchgeführt werden. Weiterhin betrifft die vorliegende Erfindung ein Hohlkörperelement gemäß Anspruch 26 sowie ein Folgeverbundwerkzeug gemäß Anspruch 27. Ein solches Verfahren und ein solches Folgverbundwerkzeug sind zum Beispiel aus der US-3775791-A bekannt. Ein solches Hohlkörperelement ist zum Beispiel aus der US 2004/042870-A bekannt.

Ein Verfahren der eingangs genannten Art sowie entsprechende Hohlkörperelemente und Zusammenbauteile sind beispielsweise aus der WO 01/72449 A2 bekannt. Ein ähnliches Verfahren ist auch aus der US-A-4,971,499 bekannt. Rechteckige Hohlkörperelemente werden auch von der Firma Profil Verbindungstechnik GmbH & Co. KG in Deutschland unter der Bezeichnung HI-Rechteckmutter verkauft.

Aufgabe der vorliegenden Erfindung ist es, das Verfahren der eingangs genannten Art so weiter zu entwickeln, dass Hohlkörperelemente, insbesondere rechteckige Mutterelemente, preisgünstig hergestellt werden können, ohne die verwendete Werkzeuge so zu belasten, dass sie frühzeitig versagen. Ferner sollten die Hohlkörperelemente mechanische Eigenschaften haben, die denen der Hohlkörperelemente, die nach der WO 01/72449 A2 oder nach dem deutschen Gebrauchsmuster 202 05 192.7 herstellt werden, mindestens ebenbürtig sind, beispielsweise eine hohe Ausziehkraft, eine ausgezeichnete Verdrehsicherheit und die darüber hinaus eine herabgesetzte Kerbwirkung zeigen, so dass die Ermüdungseigenschaften von Zusammenbauteilen, bestehend aus einem üblicherweise aus Blech bestehenden Bauteil und an diesem angebrachte Hohlkörperelemente, auch unter dynamischen Lasten verbessert werden.

Die erfindungsgemäße Aufgabe wird durch ein Verfahren der eingangs genannten Art gelöst, das durch die folgenden Schritte gekennzeichnet ist:
a) dass in einem ersten Schritt ausgehend von einem im Querschnitt rechteckigen Profil ein Durchsetzvorgang durchgeführt wird, der zu einer zylindrischen Vertiefung an einer ersten Breitseite des Profils und einem hohlzylindrischen Vorsprung an einer zweiten der ersten Breiteseite gegenüber liegenden Breitseite des Profils führt, der von einer ringförmigen Vertiefung umgeben ist,
b) dass in einem zweiten Schritt ein zwischen dem Boden der zylindrischen Vertiefung und dem Boden des hohlzylindrischen Vorsprungs verbleibender Steg zur Ausbildung eines durchgehenden Loches durchlocht bzw. herausgestanzt wird,
c) dass in einem dritten Schritt, der gegebenenfalls mit dem Schritt b) kombiniert werden kann, der hohlzylindrische Vorsprung an seinem freien Stirnende zur Ausbildung eines auf der Außenseite hinterschnittenen Stanzabschnitts abgeflacht bzw. gequetscht wird, wonach die Hohlkörperelemente vom Profil abgetrennt und gegebenenfalls mit Gewinde versehen werden.

Bei dem erfindungsgemäßen Verfahren weist das verwendete Profil somit einen rechteckigen Querschnitt auf und ist daher preisgünstig herzustellen. Durch die Schritte a), b) und c) gelingt es, Hohlkörperelemente herzustellen, ohne dass die verwendeten Werkzeuge einem hohen Verschleiß unterliegen und ohne dass die verwendeten Stempel vorzeitig versagen. Das in der deutschen Patentanmeldung 10204589.5 beanspruchte Verfahren sowie die entsprechende dort beschriebenen Folgeverbundwerkzeuge eignen sich bei entsprechender Ausführung der für die Schritte a), b) und c) verwendeten Stempel und Matrizen ohne weiteres für die Durchführung des vorliegenden Verfahrens bzw. zur Herstellung der entsprechenden Hohlkörperelemente.

Die Herstellung in Arbeitsschritten, bei denen für ein Profil immer zwei Bearbeitungen in einer Station durchgeführt werden, führt dazu, dass die Produktivität der Herstellungsanlage verdoppelt wird, ohne dass der Aufwand für die Herstellung des Folgeverbundwerkzeugs in einem Ausmaß steigt, das nicht mehr vertretbar wäre. Zwar wird durch die Verdopplung von Arbeitselementen ein gewisser Mehraufwand erforderlich, dieser lässt sich aber über entsprechende Fertigungszahlen ohne weiteres relativ früh amortisieren.

Es ist zwar möglich, in einem Folgeverbundwerkzeug mehrere Profile parallel zu bearbeiten, dies ist allerdings nicht unbedingt vorzuziehen, da bei auftretenden Problemen mit einem Profil bzw. mit der Bearbeitung eines Profils, das gesamte Folgeverbundwerkzeug bis zur Behebung der Störung angehalten werden muss, wodurch erhebliche Produktionseinbußen entstehen könnten. Nichtsdestotrotz könnte die vorliegende Erfindung unter Anwendung eines Folgeverbundwerkzeugs realisiert werden, das mehrere Profile gleichzeitig bearbeitet.

Besonders bevorzugte Ausführungen des erfindungsgemäßen Verfahrens lassen sich den weiteren Patentansprüchen entnehmen.

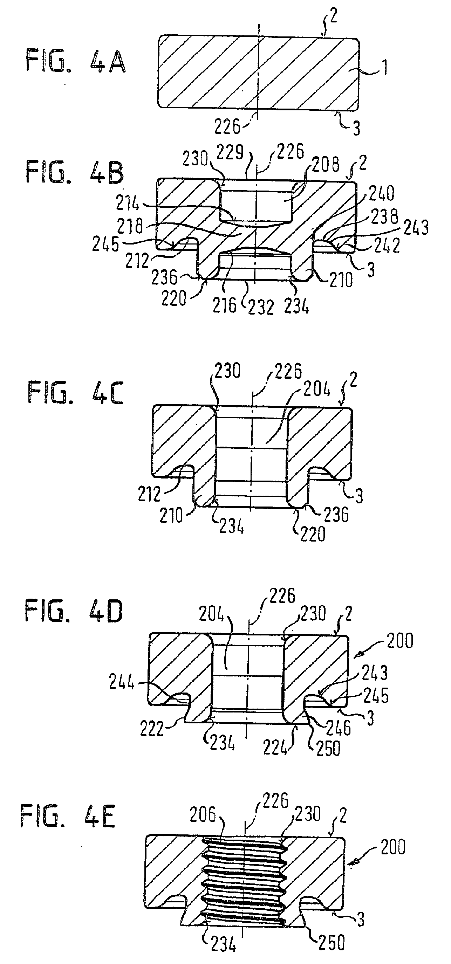

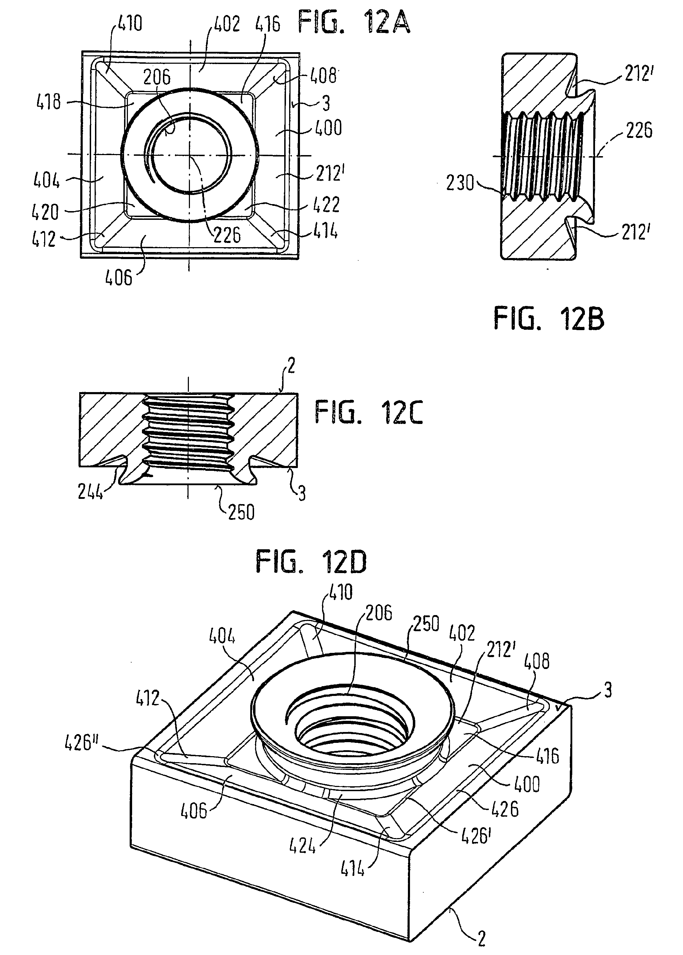

Weitere Vorteile des erfindungsgemäßen Verfahrens, der mit dem Verfahren herstellbaren Hohlkörperelemente sowie des erfindungsgemäß verwendeten Folgeverbundwerkzeug lassen sich den Figuren und der anschließenden Figurenbeschreibung entnehmen, wobei nur die Fig. 12A bis 12D ein erfindungsgemäße Hohlkörperelement darstellen, die ander Hohlkörperelemente gemäß den Fig. 4 bis 11 sich jedoch mit dem erfindungsgemäßen Verfahren herstellen lassen.

Die Figuren zeigen:
- Fig. 1: eine Ausführung eines Profils, das zum Zwecke der vorliegenden Erfindung in einem Folgeverbundwerkzeug entsprechend der Figur 2 verarbeitet wird, wobei die
- Fig. 2: eine in Bewegungsrichtung des Profils geschnittene Darstellung eines Folgeverbundwerkzeugs wiedergibt,
- Fig. 3: eine vergrößerte Darstellung des Folgeverbundwerkzeugs der Fig. 2 im Bereich der Arbeitsstationen,
- Fig. 4A-4E: eine Darstellung der einzelnen Schritte der Herstellung eines Hohlkörperelements unter Anwendung des erfindungsgemäßen Verfahrens und des Folgeverbundwerkzeugs der Fig. 2 und 3,

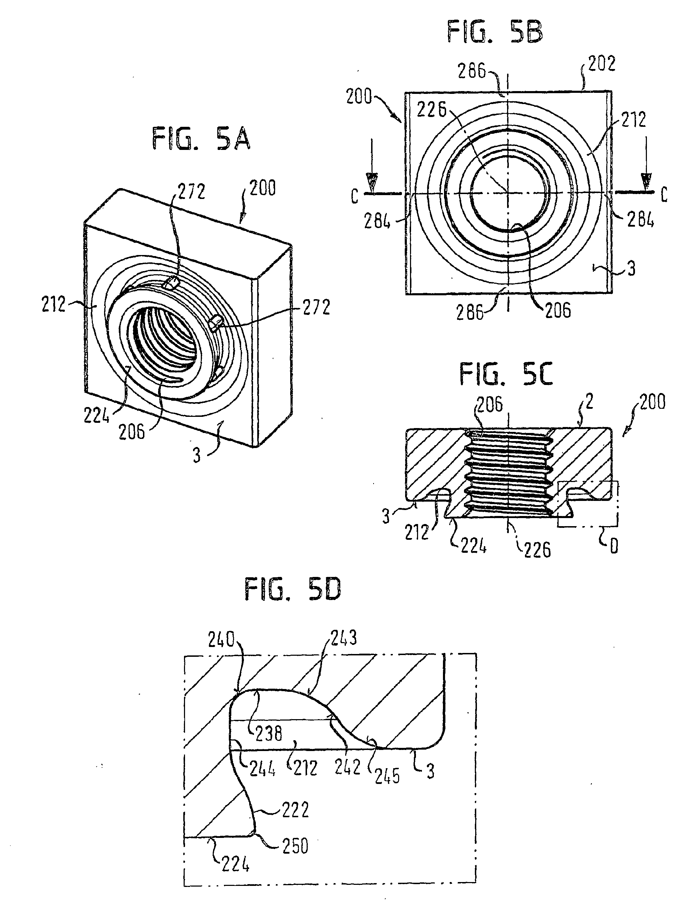

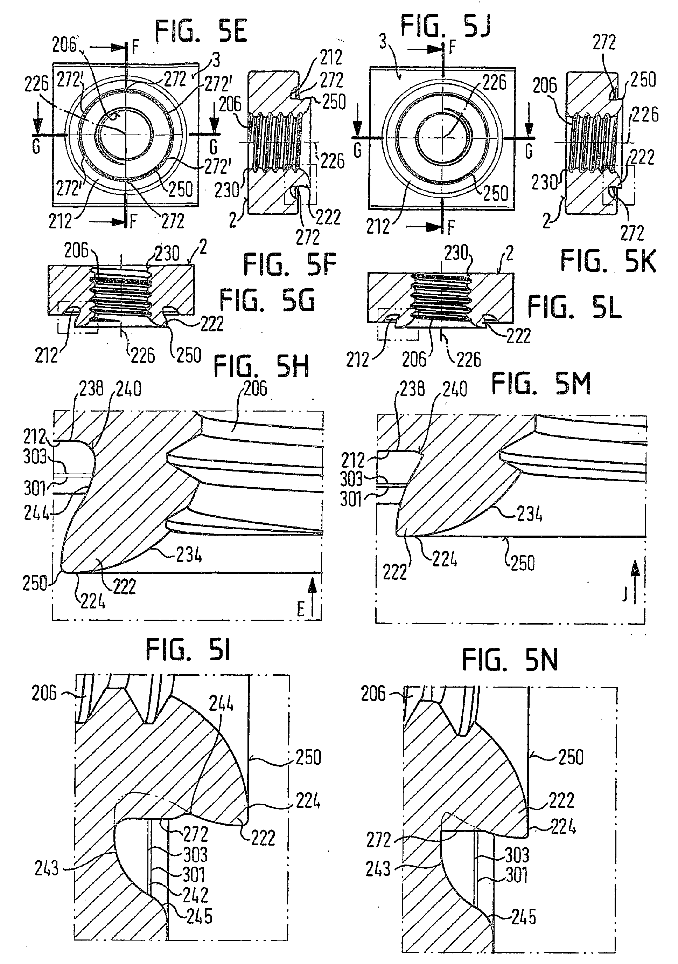

- Fig. 5A-5N: verschiedene Darstellungen des fertig gestellten Hohlkörperelements der Fig. 4A-4E, wobei Fig. 5A eine perspektivische Darstellung des so hergestellten Hohlkörperelements von unten zeigt, Fig. 5B eine Draufsicht auf das so hergestellte Hohlkörperelement von oben, Fig. 5C eine Schnittzeichnung entsprechend der Schnittebene C-C bzw. C'-C' der Fig. 5B und Fig. 5D eine vergrößerte Darstellung des Bereichs D der Fig. 5C, die weitere Figuren 5E-5I zeigen eine ideale Variante des Hohlkörperelements der Fig. 5A-5D und zwar ausgelegt für dickere Blechteilen während die Fig. 5J-5N eine weitere ideale Variante, die zur Anwendung mit dünneren Blechteilen ausgelegt ist,
- Fig. 6A-6E: Darstellungen eines weiteren Hohlkörperelements, das eine leichte Abwandlung des Hohlkörperelements gemäß Fig. 5A-5D darstellt, wobei Fig. 6A eine Draufsicht auf das Hohlkörperelement von oben zeigt, Fig. 6B eine Schnittzeichnung entlang der Schnittebene B-B der Fig. 6A, Fig. 6C eine Schnittzeichnung entsprechend der Schnittebene C-C der Fig. 6A wiedergibt und Fig. 6D und 6E perspektivische Darstellungen des Funktionselements von oben und unten sind,
- Fig. 7A-7B: die Anbringung des Hohlkörperelements an einem dünnen Blechteil bzw. einem dickeren Blechteil,
- Fig. 8A-8D: Darstellungen einer weiteren Ausführungsvariante eines Hohlkörperelements mit Verdrehsicherungsmerkmale in Form von sich radial erstreckenden Rippen, die die Ringvertiefung überbrücken, wobei die Fig. 8A eine Ansicht auf das Hohlkörperelement von unten, die Fig. 8B und 8C Schnittzeichnungen entsprechend der horizontalen Schnittebene B-B bzw. der senkrechten Schnittebene C-C der Fig. 8A und die Fig.8D eine perspektivische Zeichnung ist bzw. sind,
- Fig. 9A-9D: Darstellungen entsprechend den Fig. 8A-8D jedoch von einer Ausführungsform mit schräg gestellten Verdrehsicherungsrippen, die sich in radialer Richtung über die Ringvertiefung und in axialer Richtung an der Hinterschneidung des Stanzabschnitts entlang erstrecken,
- Fig. 10A-10D: Darstellungen entsprechend den Fig. 8A-8D jedoch von einer Ausführungsform mit abgewinkelten Verdrehsicherungsrippen, die sich in radialer Richtung über die Ringvertiefung und in axialer Richtung an der Hinter schneidung des Stanzabschnitts entlang erstrecken,
- Fig. 11A-11D: Darstellungen entsprechend den Fig. 8A-8D jedoch von einer Ausführungsform mit Verdrehsicherungsmerkmalen die durch Nuten bzw. Vertiefungen gebildet sind, und
- Fig. 12A-12D: Darstellungen entsprechend den Fig. 8A-8D jedoch von einer Ausführungsform des erfindungsgemäßen Hohlkörperelements mit einer in Draufsicht polygonalen Ringform, in konkretem Fall von quadratischer Form.

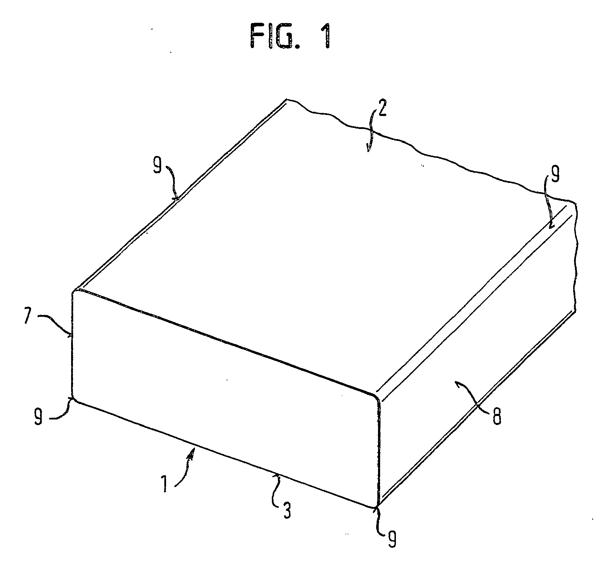

Fig. 1 zeigt einen Abschnitt eines länglichen Profils 1 mit einem rechteckigen Querschnitt, einer ersten Breitseite 2, einer zweiten Breitseite 3 und zwei Schmalseiten 7, 8. Die Längskanten 9 des Profils können wie gezeigt gerundet sind. Sie können aber auch eine andere Form haben, beispielsweise eine Fase oder eine rechtwinklige Form. Das Profil wird in einem Folgeverbundwerkzeug bearbeitet, um Hohlelemente, beispielsweise Mutterelemente mit im Wesentlichen rechteckiger oder quadratischer Form, herzustellen. Wenn die Hohlelemente als Mutterelemente realisiert werden sollen, muss ein Gewinde in das Loch des Hohlkörperelements eingeschnitten bzw. hergestellt werden. Dies erfolgt üblicherweise außerhalb des Folgeverbundwerkzeugs in einer gesonderten Maschine. Ferner besteht die Möglichkeit, das Gewinde erst nach Anbringung des Hohlkörperelements an ein Blechteil herzustellen, beispielsweise mittels einer Gewinde formenden oder Gewinde schneidenden Schraube. Ferner ist es nicht notwendig, ein Gewinde im Hohlkörperelement vorzusehen, sondern die Lochung des Hohlkörperelements könnte als glatte Bohrung zur drehbaren Lagerung einer Welle oder als Steckaufnahme zur Aufnahme eines Steckstifts dienen.

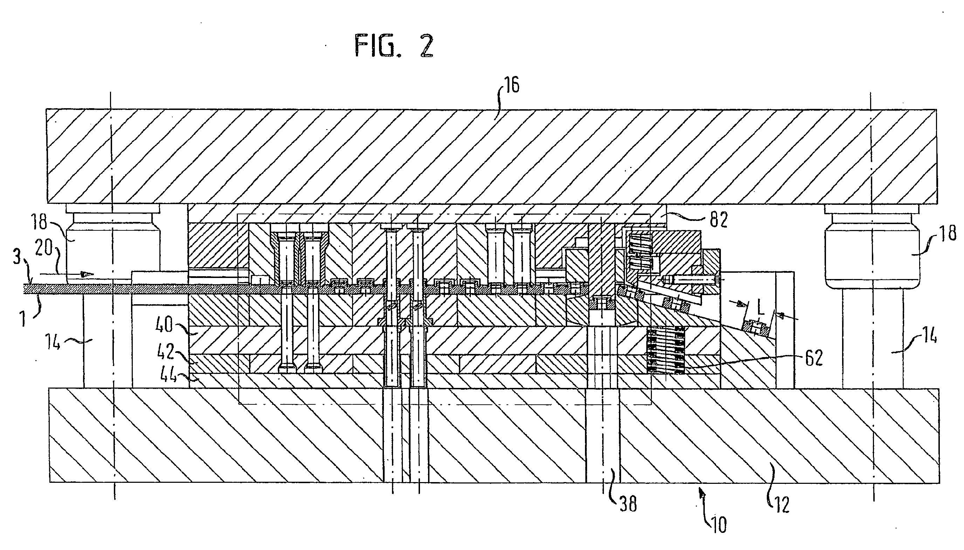

Ein erstes Folgeverbundwerkzeug 10, das zur Herstellung von Hohlkörperelementen aus dem Profil 21 der Fig. 1 oder einem ähnlichen Profil dient und für sich in der deutschen Patentanmeldung 102004004589.5 beansprucht ist, ist in Fig. 2 im Längsschnitt gezeigt, wobei der Längsschnitt durch die Mitte des Profils vorgenommen ist.

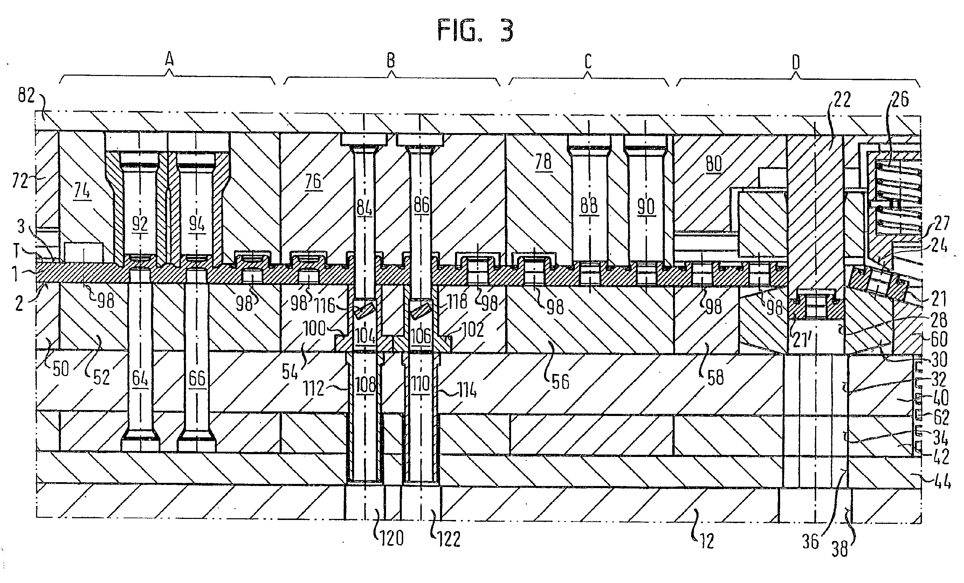

Man sieht aus Fig. 2 eine untere Platte 12, die üblicherweise an einem Pressentisch befestigt wird, entweder direkt oder indirekt über eine nicht gezeigte Zwischenplatte. Die untere Platte 12 trägt mehrere Säulen 14, vier in diesem Beispiel, von denen zwei ersichtlich sind, nämlich die zwei Säulen, die hinter der Schnittebene liegen. Oberhalb der Säulen befindet sich eine weitere Platte 16, die üblicherweise an der oberen Werkzeugplatte der Presse oder an einer Zwischenplatte der Presse befestigt ist. An der Platte 16 sind Führungen 18 angeschraubt (beispielsweise mittels Schrauben, die hier nicht dargestellt sind), wobei die Führungen 18 ausgelegt sind, um entsprechend der Hubbewegung der Presse auf und ab an den Säulen 14 zu gleiten. Das Profil 1 wird in Pfeilrichtung 20 bei jedem Hub der Presse vorgeschoben, und zwar um einen Betrag, der die doppelte Längsabmessung L der einzelnen aus dem Profil hergestellten Hohlkörperelemente beträgt. Man merkt, dass in der Darstellung gemäß Fig. 2 und 3 das Profil 1 mit der zweiten Breitseite 3 nach oben gerichtet durch das Folgeverbundwerkzeug geführt wird. Wie aus der vergrößerten Darstellung des mittleren Bereichs des Folgeverbundwerkzeugs aus der Fig. 3 ersichtlich ist, umfasst das Folgeverbundwerkzeug in diesem Beispiel vier Arbeitsstationen A, B, C, D, in denen jeweils zwei Bearbeitungen bei jedem Hub der Presse gleichzeitig vorgenommen werden.

In der ersten Station A wird als erster Schritt a) ein so genannter Durchsetzvorgang durchgeführt.

In der zweiten Arbeitsstation B wird in einem zweiten Schritt b) ein Lochvorgang und in der dritten Arbeitsstation C in einem dritten Schritt c) ein Quetsch- bzw. Abflachvorgang durchgeführt. Schließlich wird in der vierten Arbeitsstation D ein Abschlagstempel 22 verwendet, um zwei Hohlkörperelemente bei jedem Hub der Presse vom Profil 1 abzutrennen. Dabei schneidet die rechte Seite des Stempels das Profil an einer Trennstelle durch, die sich hinter dem ersten Hohlkörperelement, d.h. dem Hohlkörperelement 21 in Fig. 3 befindet sowie an einer Trennstelle hinter dem zweiten Hohlkörperelement 21'. Das Folgeverbundwerkzeug ist in den Fig. 2 und 3 in der geschlossenen Stellung gezeigt, in der die zwei Hohlkörperelemente 21 und 21' gerade vom Profil 1 abgetrennt wurden. Kurz vor dem Abschlagvorgang berührt die vordere Seite des Mutterelements 21 die Schrägfläche 24 der rechtwinkligen Nocke 27, die von einer Schraubendruckfeder 26 nach unten gedrückt wird. Der Vorschub des Profilstreifens drückt daher über die schräg gestellte Fläche der Nocke 24 diese nach oben, wodurch die Feder 26 komprimiert wird. Nach erfolgter Abtrennung des ersten Hohlkörperelements 21 drückt die Nocke 24 auf der rechten Seite des Mutterelements 21 und kippt dieses in die geneigte Stellung, die auf der rechten Seite der Fig. 3 ersichtlich ist. Das Mutterelement 21 fällt dann auf eine Rutsche aus dem Arbeitsbereich des Folgeverbundwerkzeugs und kann beispielsweise in der Position gemäß Fig. 2 dann seitlich aus dem Folgeverbundwerkzeug herausgeführt werden, beispielsweise über seine seitliche Rutsche unter der Einwirkung von Schwerkraft oder mit einem Druckluftstoß usw.

Das zweite Hohlkörperelement 21' fällt durch ein Loch 28 in der Abschlagmatrize 30 und anschließend durch entsprechende Bohrungen 32, 34, 36 und 38 hindurch, die in Platten 40, 42, 44 und 12 ausgebildet sind.

Die Bohrungen bzw. das Loch 38 in der Platte 12 können mit einer weiteren Bohrung (nicht gezeigt) im Pressentisch oder in einer etwaig vorgesehenen Zwischenplatte zwischen der Platte 12 und dem Pressentisch führen, die die Herausführung der Mutterelemente wie 21' ermöglicht, beispielsweise unter der Einwirkung der Schwerkraft oder über eine seitliche Rutsche oder unter Anwendung eines Druckluftstoßes.

Bei der konkreten, in Fig. 3 gezeigten Konstruktion, ist die Platte 44 über nicht dargestellte Schrauben mit der Platte 12 verschraubt. Die Platte 42 besteht aus mehreren Plattenabschnitten, die den jeweiligen Arbeitsstationen zugeordnet sind, die über weitere, nicht dargestellte Schrauben (da außerhalb der Ebene der Schnittdarstellung angeordnet) mit der durchgehenden Platte 44 verschraubt sind. Die durchgehende Platte 40 ist ebenfalls mit den Abschnitten der Platte 42 verschraubt, und zwar auch hier mittels nicht dargestellter Schrauben. Oberhalb der durchgehenden Platte 40 befinden sich wiederum Plattenabschnitte 50, 52, 54, 56, 58 und 60, die wiederum mit der Platte 40 verschraubt sind. Die Platte 50 ist eine Abstützplatte, die eine untere Führung für das Profil 1 bildet, genauer gesagt für die erste Breitseite 2 des Profils 1, die in dieser Darstellung die Unterseite bildet. Die Plattenabschnitte 52, 54 und 56 sind den Arbeitsstationen A, B und C zugeordnet, während die Plattenabschnitte 58 und 60, die eine Aufnahme für die Abschlagmatrize 30 bilden, der Arbeitsstation D zugeordnet sind.

An mehreren Stellen zwischen der durchgehenden Platte 44 und den Plattenabschnitten 50, 52, 54, 56, 58 und 60 befinden sich kräftige Schraubendruckfedern 62, von denen nur die eine Feder in den Fig. 2 und 3 zu sehen ist, da die anderen außerhalb der Schnittebene angeordnet sind. Diese Federn, wie 62, haben die Funktion, beim Öffnen der Presse die Plattenabschnitte 50 bis 60 anzuheben, wodurch auch der Profilstreifen 1 angehoben wird und hierdurch aus dem Arbeitsbereich der Durchsetzstempel 64, 66 gelangt, wodurch das Profil um den doppelten Betrag der Länge L der Hohlkörperelemente 21 weiter vorgeschoben werden kann.

Die Trennebene des Folgeverbundwerkzeugs befindet sich oberhalb des Profils 1 und ist mit T in Fig. 3 bezeichnet.

Oberhalb des Profilstreifens befinden sich wiederum Plattenabschnitte 72, 74, 76, 78 und 80, die mit einer durchgehenden Platte 82 verschraubt sind - auch hier über nicht dargestellte Schrauben. Ferner ist die Platte 82 mit der oberen Platte 16 verschraubt.

Bei Öffnung der Presse werden somit die Platten 72, 74, 76, 78 und 80 mit der Platte 22 und der oberen Platte 16 angehoben, und zwar so weit, dass die zwei Lochstempel 84, 86 und die zwei oberen Abflachstempel 88 und 90, wie auch die Matrizen 92 und 94, die mit den Durchsetzstempel 64, 66 zusammenarbeiten und auch der Abschlagstempel 22 außer Eingriff mit dem Profilstreifen 1 gelangen. Durch diese Bewegung, gekoppelt mit der Anhebung des Profilstreifens durch die Feder 62, wird es ermöglicht, dass der Profilstreifen 1 um die doppelte Längenabmessung der Hohlkörperelemente 21 weiter geschoben werden kann in Vorbereitung für den nächsten Hub der Presse.

Man sieht, dass die Arbeitsstationen A und B eine Längenabmessung, d.h. in Bewegungsrichtung 20 des Profilstreifens 1, aufweisen, die der vierfachen Längenabmessung eines Hohlkörperelements 21 entspricht. Die Arbeitsstation C hat eine Längenabmessung, die der dreifachen Längenabmessung eines Hohlkörperelementes 21 entspricht, während die Arbeitsstation D eine Längenabmessung aufweist, die ein mehrfaches der Längenabmessung des Hohlkörperelements 21, in diesem Beispiel das sechsfache, aufweist. Dies bedeutet, dass so genannte leere Stellen wie 98 vorhanden sind, an denen keine Bearbeitung des Profilstreifens 1 stattfindet. Diese leeren Stellen schaffen aber Platz, der notwendig ist, um die einzelnen Bestandteile der verwendeten Werkzeuge ausreichend stabil auszubilden und abzustützen.

Ferner sieht man aus Fig. 3, dass die Lochmatrizen 100, 102, die mit den Lochstempeln 84, 86 zusammen arbeiten, eine mittlere Bohrung 104 bzw. 106 aufweisen, die mit weiteren Bohrungen 108, 110 in Einsatzhülsen 112, 114 ausgerichtete sind, die es ermöglichen, die Stanzbutzen 116, 118 zu entsorgen. Diese fallen nämlich durch die Bohrung 108, 114, die im Durchmesser größer sind als die Bohrung 104, 106 und durch die weiteren Bohrungen 120, 122 in der Platte 12 nach unten und können über entsprechende Passagen im Pressentisch oder in einer etwaig vorgesehenen Zwischenplatte in der gleichen Art und Weise wie die Mutterelemente 21' entsorgt bzw. abgeführt werden.

Obwohl hier nicht gezeigt, befinden sich links und rechts des Profilstreifens 1, d.h. hinter der Ebene der Zeichnung vor der Ebene der Zeichnung der Fig. 3, Führungselemente, die beispielsweise durch Wangen der Platten 50, 52, 54, 56 und 58 gebildet sein können, die dafür sorgen, dass der Profilstreifen der gewünschten Bewegungsbahn durch das Folgeverbundwerkzeug folgt. Es kann ein geringfügiger seitlicher Freiraum vorgesehen werden, der eine etwaige Ausdehnung des Profilstreifens in Querrichtung zulässt.

Die konstruktiven Einzelheiten der Durchsetzstempel 64, 66, der damit zusammen arbeitenden Matrizen 92, 94, der Lochstempel 84, 86 der damit zusammen wirkenden Matrizen 100, 102 und der Abflachstempel 88, 90 gehen aus den Zeichnungen der Fig. 2 und 3 hervor und werden im Übrigen genauer in den nachfolgenden Zeichnungen näher erläutert.

Mittels der Folgeverbundwerkzeuge der Fig. 2, 3 wird ein Verfahren zum Herstellen von Hohlkörperelementen, wie Mutterelemente, zur Anbringung an üblicherweise aus Blech bestehenden Bauteilen realisiert. Das Verfahren dient der Herstellung von Hohlkörperelementen 21, 21', beispielsweise mit einem zumindest im Wesentlichen quadratischen oder rechteckigen Außenumriss, durch Ablängung einzelner Elemente von einem in Form einer Profilstange oder eines Wickels vorliegenden Profil 1 nach vorheriger Stanzung von Löchern 23 in das Profil 1, gegebenenfalls mit anschließender Ausbildung eines Gewindezylinders unter Anwendung eines Folgeverbundwerkzeugs mit mehreren Arbeitsstationen A, B, C, D, in denen jeweilige Bearbeitungen durchgeführt werden. Das Verfahren zeichnet sich dadurch aus, dass in jeder Arbeitsstation A, B, C, D für das Profil 1 bzw. für mehrere nebeneinander angeordnete Profile jeweils zwei Bearbeitungen für jeden Hub des Folgeverbundwerkzeugs gleichzeitig durchgeführt werden. D.h., es ist grundsätzlich möglich, mehrere Profile 1 nebeneinander und zeitgleich im gleichen Folgeverbundwerkzeug zu bearbeiten, vorausgesetzt, die entsprechende Anzahl von einzelnen Werkzeugen, wie Durchsetzstempel, Lochstempel und die zugeordneten Matrizen, ist vorhanden.

In der letzten Arbeitsstation werden mittels eines Abschlagstempels 22 von dem bzw. von jedem Profil 1 jeweils zwei Hohlkörperelemente 21, 21' abgetrennt.

Der Abschlagstempel 22 durchtrennt das Profil an einer ersten Stelle hinter einem ersten Hohlkörperelement 21 und an einer zweiten Stelle hinter einem zweiten Hohlkörperelement 21', wobei das zweite Hohlkörperelement 21' in Richtung der Bewegung des Abschlagstempels quer zur Längsrichtung des Profils 1 aus der Bewegungsbahn des Profils herausgeführt wird. Das erste Hohlkörperelement 21 wird in der Abschlagstation des Folgeverbundwerkzeugs zumindest vorerst im Allgemeinen in Richtung der Bewegungsbahn des Profils herausgeführt.

Jede Arbeitsstation des Folgeverbundwerkzeugs weist eine Länge in Laufrichtung des Profils auf, die dem Dreifachen oder dem Vierfachen oder dem Mehrfachen der Längsabmessung eines fertigen Hohlkörperelements 21, 21' entspricht.

Bei der gezeigten Ausführung des Folgeverbundwerkzeugs wird eine gefederte Nocke 27 mit einer zur Bewegungsbahn des Profils schräggestellten Nockenfläche 24 von der vorderen Kante des vorderen Endes des Profils am Ausgangsende der letzten Arbeitsstation entgegen der Kraft einer Federeinrichtung 26 vorgespannt. Nach Abtrennung des am vorderen Ende des Profils ausgebildeten Hohlkörperelements 21 wird dieses von der gefederten Nocke nach unten gekippt, um die Entfernung aus dem Folgeverbundwerkzeug zu erleichtern.

Bei der Ausführung gemäß Fig. 2 und 3 arbeiten die unteren Stempel 64, 66 zur Durchführung des Durchsetzvorgangs und die Lochstempel 84, 86 zur Durchführung des Lochvorgangs von entgegengesetzten Seiten des Profils 1 auf diesem. Bei der Durchführung des Abflachvorgangs wird mit jeweiligen Abflachstempeln 88, 90 von oben auf den Profilstreifen 1 eingewirkt, während der Streifen im Bereich der Lochung von einem Plattenabschnitt 56 abgestützt wird. Stattdessen wäre es auch möglich, Abstützdorne am Plattenabschnitt 56 an den Stellen der Löcher im Profilstreifen anzuordnen, falls es notwendig erscheint, das Profilmaterial in diesem Bereich während des Abflachvorgangs abzustützen, beispielsweise um eine scharfkantigere Ausbildung der Stirnseite des hohlen Stanzabschnitts zu erreichen.

Es werden nun einige Beispiele angegeben, die die Herstellung von bestimmten Hohlkörperelementen beschreiben.

Bezug nehmend auf die Fig. 4A - 4E und die Fig. 5A -5D wird nunmehr das erfindungsgemäße Verfahren zum Herstellen von Hohlkörperelementen, wie Mutterelemente, beschrieben, die zur Anbringung an üblicherweise aus Blech bestehenden Bauteilen ausggelegt sind. Insbesondere geht es hier um ein Verfahren zur Herstellung von Hohlkörperelementen 200 mit einem zumindest im Wesentlichen quadratischen oder rechteckigen Außenumriss 202 durch Ablängung einzelner Elemente von einem in Form einer Profilstange (1, Fig. 1) oder eines Wickels vorliegenden Profils nach vorheriger Stanzung von Löchern 204 in das Profil, gegebenenfalls mit anschließender Ausbildung eines Gewindezylinders 206 unter Anwendung eines Folgeverbundwerkzeugs (Fig. 2, Fig. 3) mit mehreren Arbeitsstationen A, B, C und D, in denen jeweilige Bearbeitungen durchgeführt werden. Das Verfahren wird durch die folgenden Schritte gekennzeichnet:
a) In einem ersten Schritt, ausgehend von einem im Querschnitt rechteckigem Profil 1, Fig. 4A), wird ein Durchsetzvorgang unter Anwendung der Durchsetzmatrizen 92, 94, die von oben kommen, und der Durchsetzstempel 64, 66 durchgeführt. Der Durchsetzvorgang führt zu einer zylindrischen Vertiefung 208 an einer ersten Breitseite 2 des Profils 1 und einem hohlzylindrischen Vorsprung 210 an einer zweiten, der ersten Breiteseite 2 gegenüber liegenden Breitseite 3 des Profils, der von einer ringförmigen Vertiefung 212 umgeben ist, die in Fig. 4B gezeigt ist. Der Profilstreifen 1 wird beim Schließen der Presse bzw. des Folgeverbundwerkzeugs auf die oberhalb des Plattenabschnitts 52 hervorstehenden Enden der Durchsetzstempel 64 und 66 gedrückt. Die hervorstehenden Enden der Durchsetzstempel haben eine zu der Form der zylindrischen Vertiefung 208, die in Fig. 4B gezeigt ist komplementäre Form. In ähnlicher Weise haben die Stirnenden der mit dem Durchsetzstempel zusammen arbeitenden Matrizen 92, 94 eine zu der des hohlzylindrischen Vorsprungs 210 und der diese umgebenden Ringvertiefung 212 gemäß Fig. 4B komplementäre Form.
b) In einem zweiten Schritt wird ein zwischen dem Boden 214 der zylindrischen Vertiefung 208 und dem Boden 216 des hohlzylindrischen Vorsprungs 210 verbleibender Steg 218 beim Schließen der Presse bzw. des Folgeverbundwerkzeugs 10 mittels der Lochstempel 88, 90 zur Ausbildung des durchgehenden Loches 204 (Fig. 4C) durchlocht. Die Stanzbutzen werden wie erwähnt über die Bohrungen 104, 106 bzw. 108, 110 entsorgt.
c) In einem dritten Schritt wird der hohlzylindrische Vorsprung 210 an seinem freien Stirnende 220 zur Ausbildung eines auf der Außenseite hinterschnittenen Stanzabschnitts 222 abgeflacht, wodurch die Stirnfläche 224 in Fig. 4D ausgebildet wird, die in einer Ebene parallel zu den Breitseiten 2 und 3 und senkrecht zur mittleren Längsachse 226 des Lochs 204 steht. Danach können die Hohlkörperelemente in der Arbeitsstation D vom Profil abgetrennt und anschließend gegebenenfalls mit Gewinde 206 versehen werden, wie in Fig. 4E bzw. in der dazu identischen Fig. 5C gezeigt.

Der dritte Schritt könnte gegebenenfalls mit dem Schritt b) kombiniert werden.

Beim Durchsetzvorgang des Schrittes a) werden der Durchmesser der zylindrischen Vertiefung und der innere Durchmesser des hohlzylindrischen Vorsprungs zumindest im Wesentlichen gleich ausgeführt.

Ferner wird vorzugsweise beim Durchsetzvorgang des Schrittes a) oder beim Lochvorgang des Schritts b) oder beim Abflachvorgang des Schritts c) die Mündung 229 der zylindrischen Vertiefung 208 an der ersten Breitseite 2 des Profils mit einer gerundeten oder angefasten Einlaufkante 230 ausgeführt, die bei Verwendung des Elements den Gewindeauslauf bildet.

Beim Durchsetzvorgang des Schrittes a) oder beim Lochvorgang des Schrittes b) oder beim Abflachvorgang des Schrittes c) wird vorzugsweise auch die Mündung 232 des hohlzylindrischen Vorsprungs 210 an ihrem freien Ende mit einer gerundeten oder angefasten Auslaufkante 234 versehen, die beim fertig gestellten Element den Gewindeeinlauf bildet.

Bei der Durchlochung des Steges gemäß Schritt b) wird das Loch 204 mit einem Durchmesser erzeugt, der dem Durchmesser der zylindrischen Vertiefung 208 und dem inneren Durchmesser des hohlzylindrischen Vorsprungs 210 zumindest im Wesentlichen entspricht. Ferner wird beim Durchsetzvorgang des ersten Schrittes a) das freie Ende des hohlzylindrischen Vorsprungs 210 außen mit einer Fase 236 versehen. Außerdem wird bei diesem Durchsetzvorgang die Ringvertiefung 212 mit einem ringförmigen Bodenbereich 238 versehen, der zumindest in etwa in einer Ebene parallel zu der ersten und zweiten Breitseite 2, 3 des Profilstreifens steht, auf der radial inneren Seite mit einem zumindest im Wesentlichen gerundeten Übergang 240 in die Außenseite des hohlzylindrischen Vorsprungs 210 und auf der radial äußeren Seite in eine konusförmige Fläche 242 übergeht, die einen eingeschlossenen Konuswinkel im Bereich zwischen 60 bis 120°, vorzugsweise bei etwa 90° aufweist.

Der Übergang 243 vom ringförmigen Bereich 238 der Ringvertiefung 212 in die konusförmige Fläche 242 wird gerundet, wie auch der Auslauf 245 der Konusfläche der Ringvertiefung 212 in die zweite Breitseite 3 des Profils. Die Konusfläche 242 kann sich in der Praxis so darstellen, dass der gerundete Übergang 243 tangential in den gerundeten Auslauf 245 übergeht.

Bei Herstellung der Hinterschneidung 244 wird diese durch einen zylindrischen Teil des hohlzylindrischen Vorsprungs 210 gebildet, der in etwa in der Höhe der zweiten Breitseite 3 des Profils 1 in einen bei Durchführung des Schrittes c) verdickten Bereich 246 des hohlzylindrischen Vorsprungs 210 übergeht, der zumindest im Wesentlichen über die zweite Breitseite 3 des Profils vorsteht.

Der verdickte Bereich 246 des hohlzylindrischen Vorsprungs 210 wird zumindest im Wesentlichen konusförmig ausgeführt und divergiert von der ersten und zweiten Breitseite weg, wobei der Konuswinkel des verdickten Bereichs des hohlzylindrischen Vorsprungs benachbart zur Stirnseite 224 im Bereich zwischen 30° und 70°, vorzugsweise bei etwa 50° liegt. Nach dem Abflachungsvorgang endet der hohlzylindrische Vorsprung 219 an seinem freien Ende außen in einer möglichst scharfkantigen Stanzkante 250.

Wie insbesondere aus den Fig. 5A und 5B ersichtlich, ist die Ringvertiefung mit einem Außendurchmesser ausgeführt, der nur etwas kleiner ist als die kleinste Querabmessung des in Draufsicht rechteckigen Hohlkörperelements, wodurch die Ringvertiefung 212 mit der zweiten Breitseite 3 des Profils 1 an den engsten Stellen in der Ebene der zweiten Breitseite 3 verbleibende Stege 284, 286 im Bereich von 0,25 bis 1 mm, vorzugsweise von etwa 0,5 mm bildet.

Die Fig. 5E-5I bzw. 5J-5N zeigen im Wesentlichen das gleiche Elemente wie die Figuren 5A-5D, jedoch mit kleinen Abweichungen im Bezug auf die Ausbildung des Stanzabschnitts 222, der in den beiden Versionen gemäß Fig. 5E-5I bzw. 5J-5N eine ideale Form aufweist.

In den Fig. 5E-5I bzw. 5J-5N wurden die gleichen Bezugszeichen eingesetzt, die auch im Zusammenhang mit den bisherigen Ausführungsbeispielen verwendet wurden. Es versteht sich, dass die bisherige Beschreibung auch für die Fig. 5E-5I bzw. 5J-5N gilt, d.h. dass die frühere Beschreibung von Merkmalen mit den gleichen Bezugszeichen oder auch für die Beschreibung der Fig. 5E-5I bzw. 5J-5N gilt. Diese Konvention wird auch bei den weiteren Figuren beibehalten, so dass nur wesentliche Unterschiede oder bedeutende Merkmale hier extra beschrieben werden.

Der Hauptunterschied zwischen der Ausführung gemäß Fig. 5E-5I und der Ausführung gemäß Fig. 5J-5N liegt darin, dass die Ausführung gemäß Fig. 5E-5I für dickere Bleche im Bereich von beispielsweise 1,2 bis 2,0 mm Bleckdicke verwendet wird, während die Ausführung gemäß Fig. 5J-5N für eher dünnere Bleche, beispielsweise im Bereich von 0,4 bis 1,2 mm Bleckdicke verwendet wird.

Konkret zeigt die Fig. 5E eine Ansicht von unten auf die untere Stirnseite des Stanzabschnitts 222, d.h. in Pfeilrichtung E der Fig. 5H. Die Fig. 5F ist eine Schnittzeichnung entsprechend der vertikalen Schnittebene F-F in Fig. 5E, so dass in Fig. 5F die zwei Verdrehsicherungsrippen 272, die sich in axialer Richtung erstrecken und die sich an der 12 Uhr und 6 Uhr-Stellung in Fig. 5E befinden, jeweils im Schnitt gesehen werden können. Dagegen können die vier weiteren Verdrehsicherungsrippen 272', die in Fig. 5E eingetragen sind, weder in Fig. 5F noch in Fig. 5G, welche eine Schnittzeichnung entsprechend der Schnittebene G-G zeigt, gesehen werden. Sie können auch nur andeutungsweise in Fig. 5E erkannt werden, da sie im Prinzip hinter dem Stanzabschnitt 222 weitestgehend versteckt sind. In der Schnittzeichnung der Fig. 5G sind sie nicht ersichtlich, da die Schnittebene so gewählt ist, dass die Verdrehsicherungsrippen 272 bzw. 272' nicht in der Schnittebene oder benachbart zur Schnittebene liegen und auch nicht so groß sind, dass sie in Seitenansicht in der Schnittebene erkannt werden könnten.

Die Fig. 5H und 5I zeigen jeweils eine vergrößerte Darstellung der in einem strichpunktierten Rechteck in Fig. 5G bzw. 5F gezeigten Bereiche. Aus den Fig. 5H bis 5I ist erkennbar, dass die untere Stirnseite 224 des Stanzabschnitts 222 in der Schnittebene durch einen Radius bebildet ist, der tangential an der Schneidkante 250 ausläuft.

Dies stellt einen Unterschied zu der Stirnseite 224 der Ausführung gemäß Fig. 5A-5D dar, die einen deutlichen Ringflächenanteil in einer Ebene senkrecht zur mittleren Längsachse 226 des Hohlkörperelements aufweist.

Ferner ist insbesondere aus den Zeichnungen gemäß Fig. 5H und 5I zu erkennen, dass der als konusförmige Schrägfläche 242 in Fig. 5D bezeichnete Bereich der Ringvertiefung 212 an sich durch zwei Radien gebildet ist, die ineinander an einem Wendepunkt übergehen, in diesem Beispiel mit nur einem sehr kurzen Geradeanteil, der durch die zwei Linien 301 und 303 angedeutet ist, und der auch in der Praxis nicht vorhanden sein muss, d.h. die zwei Radien, die die schräg gestellte Wand der Vertiefung bilden (gekrümmte Bereiche 243 und 245), können unmittelbar tangential ineinander übergehen. Nichtsdestotrotz ist im Bereich des Wendepunkts ein Flächenbereich vorhanden, der als annähernd flach bezeichnet werden kann, so dass die Bezeichnung "zumindest im Wesentlichen konusförmig" gerechtfertigt ist. Natürlich könnte auch ein klarer, streng konusförmiger Bereich vorgesehen werden.

Durch die Verwendung der gleichen Bezugszeichen ist erkennbar, dass die Figuren 5J-5N genauso zu verstehen sind, wie die Figuren 5E-5I. Der einzige Unterschied hier ist, dass die Verdrehsicherungsnasen 272' in Fig. 5E in Fig. 5J nicht gesehen werden können, und zwar deshalb nicht, weil sie wirklich hinter der ringförmigen Stanzkante 250 versteckt sind. Somit sind die Verdrehsicherungsnasen 272 nur in Fig. 5K bzw. in Fig. 5N zu sehen.

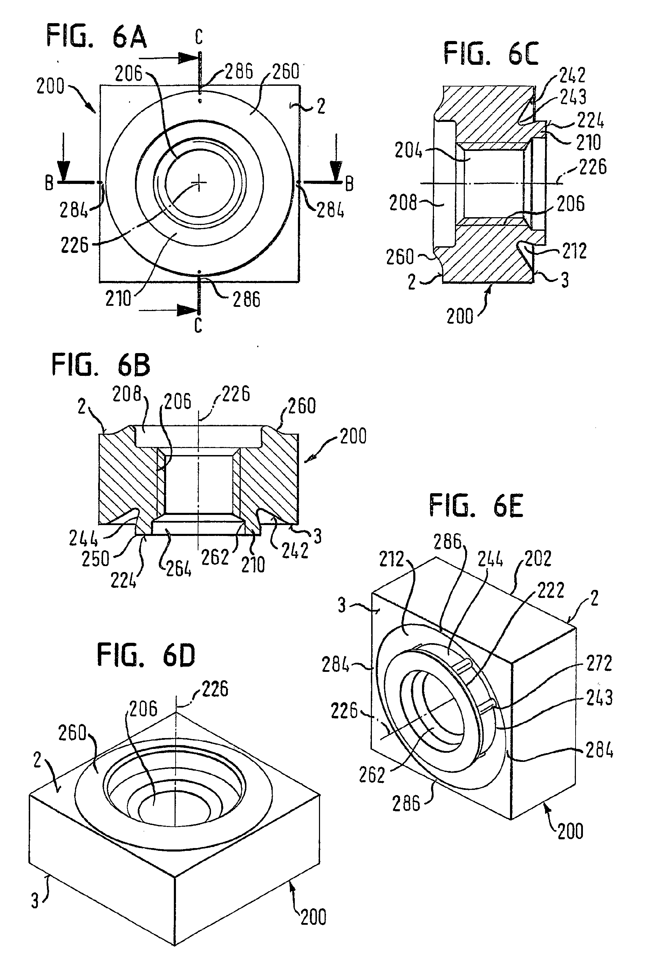

In einem alternativen Verfahren, das zu dem Hohlkörperelement nach den Fig. 6A bis 6E führt, wird beim Durchsetzvorgang gemäß Schritt a) durch die Anwendung entsprechend gestalteter Durchsetzstempel 64, 66 und Durchsetzmatrizen 92, 94 auf der ersten Breitseite 2 des Profils um die zylindrische Vertiefung 208 herum eine ringförmige Erhebung 260 ausgebildet, die beispielsweise zumindest im Wesentlichen ein Materialvolumen darstellt, das dem Volumen der Ringvertiefung 212 um den hohlzylindrischen Vorsprung herum entspricht. Bei diesem Ausführungsbeispiel ist der Durchmesser der zylindrischen Vertiefung 208 größer als der Innendurchmesser des hohlzylindrischen Vorsprungs 210. Ferner endet das Gewinde 206 in einem konischen Bereich 262 eines Stufenloches 264, das in diesem Beispiel gegebenenfalls anstelle eines gerundeten Gewindeauslaufs verwendet werden kann (was auch bei der Ausführung gemäß Fig. 4A bis 4C bzw. Fig. 5A bis 5D möglich wäre).

Der Boden der Ringvertiefung ist in dieser Ausführungsform allein durch einen gerundeten Übergang 243 vom hohlzylindrischen Vorsprung 210 in die Konusfläche 242 gebildet, was auch bei der Ausführung gemäß Fig. 4A bis 4E bzw. Fig. 5A bis 5D möglich wäre.

Beim Durchsetzvorgang gemäß Schritt a) werden, wie in Fig. 5A und Fig. 6E ersichtlich, durch entsprechende Profilierung der Durchsetzstempel 9, 94 Verdrehsicherungsmerkmale 272 außen am hohlzylindrischen Vorsprung 210 bzw. innen im Bereich der Ringvertiefung 212 um den hohlzylindrischen Vorsprung 210 herum ausgebildet.

Diese Verdrehsicherungsmerkmale können (wie gezeigt) durch Rippen 272 und/oder Nuten (nicht gezeigt) an der radial äußeren Seite des hohlzylindrischen Vorsprungs 210 gebildet werden. Diese Rippen 272 erstrecken sich in axialer Richtung 226 und überbrücken die Hinterschneidung 244 des hohlzylindrischen Vorsprungs 210. Sie haben eine radiale Breite, die zumindest im Wesentlichen im Bereich zwischen 40 % und 90 % der maximalen radialen Tiefe der Hinterschneidung entspricht.

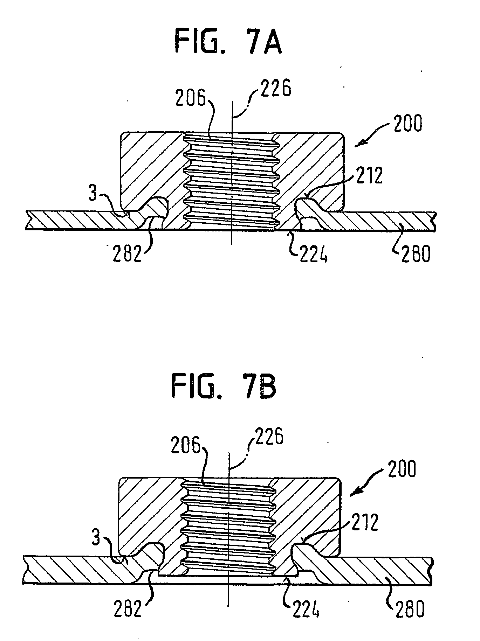

Es entsteht somit ein Hohlkörperelement 200 zur Anbringung an einem üblicherweise aus Blech bestehenden Bauteil 280 (Fig. 7A bzw. Fig. 7B) mit einem zumindest im Wesentlichen quadratischen oder rechteckigen Außenumriss 202, mit einer ersten Breitseite 2 und einer zweiten Breitseite 3, mit einem eine Hinterschneidung 244 aufweisenden Stanzabschnitt 246, der über die zweite Breitseite vorsteht und von einer Ringvertiefung 212 in der zweiten Breitseite umgeben ist sowie mit einem Loch 204, das sich von der ersten Breitseite 2 durch den Stanzabschnitt 246 hindurch erstreckt, wobei das Loch gegebenenfalls einen Gewindezylinder 206 aufweist und das Hohlkörperelement sich dadurch auszeichnet, dass Verdrehsicherungsmerkmale 272 außen am hohlzylindrischen Vorsprung 210 und/oder innen im Bereich der Ringvertiefung 212 um den hohlzylindrischen Vorsprung 210 herum ausgebildet werden.

Das Hohlkörperelement zeichnet sich ferner dadurch aus, dass die zweite Breitseite 3 radial außerhalb der Ringvertiefung 212 in einer Ebene liegt, d.h. abgesehen von etwaigen Rundungen oder Fasen an den Übergängen in die Seitenflanken des Hohlkörperelements, und somit keine Balken, Nuten oder Hinterschneidungen im Bereich außerhalb der Ringvertiefung aufweist.

Die Ringvertiefung 212 ist mit einem Außendurchmesser ausgeführt, der nur etwas kleiner ist als die kleinste Querabmessung des in Draufsicht rechteckigen Hohlkörperelements, wodurch die Ringvertiefung mit der zweiten Breitseite 3 des Profils an den engsten Stellen 284, 286 in der Ebene der zweiten Breitseite verbleibende Stege im Bereich von 0,25 bis 1 mm, vorzugsweise von etwa 0,5 mm bildet.

Die Fig. 7A und 7B zeigen wie ein und dasselbe Element 200 gemäß Fig. 5A bis 5D mit einem dünneren Blechteil (Fig. 7A) von beispielsweise 0,7 mm Dicke und mit einem dickeren Blechteil (Fig. 7B) von beispielsweise 1,85 mm Dicke verwendet werden kann. Das Blechmaterial füllt nach der Verpressung mittels einer Matrize die gesamte Ringvertiefung 212 aus und liegt an der vollen Fläche der Ringvertiefung und der Verdrehsicherungsmerkmale 272 im Bereich der Hinterschneidung an. In beiden Fällen erfolgt daher eine gute Abdeckung mit den Verdrehsicherungsrippen 272 und daher eine gute Verdrehsicherung zwischen dem Hohlkörperelement 200 und dem Blechteil 280. Der Stanzabschnitt 246, der in diesen Beispielen zumindest im Wesentlichen nicht verformt wird, wird selbststanzend in das Blechteil eingebracht. Die abgeflachte Stirnseite 224 des Stanzabschnitts 246 liegt bei dünnen Blechen (wie in Fig. 7A gezeigt) in der Höhe der Unterseite des Blechteils und bei dickeren Blechteilen (Fig. 7B) oberhalb der Unterseite des Blechteils (d.h. die dem Körperteil des Hohlkörperelements abgewandte Seite des Blechteils). In beiden Fällen liegt um den Stanzabschnitt herum eine Ringvertiefung 282 vor, die in ihrer Form durch die konkrete Form der komplementär gestalteten Matrize bei der selbststanzenden Anbringung des Hohlkörperelements in einer Presse oder durch einen Roboter oder in einem C-Gestell vorgegeben ist. Dabei weist die Matrize wie bei der selbststanzenden Anbringung von Befestigungselementen üblich eine mittlere Bohrung auf, durch die der entstehende Stanzbutzen entsorgt wird. Obwohl die Hohlkörperelemente selbststanzend ausgeführt sind, können sie dennoch in vorgelochten Blechteilen verwendet werden. Mit einer zweiten Ausführung des erfindungsgemäßen Hohlkörperelements kann ein weiterer Dickebereich von Blechteilen, beispielsweise 1,85 bis 3 mm, abgedeckt werden. Es muss lediglich der Stanzabschnitt etwas länger ausgeführt werden.

Da die in Draufsicht quadratischen Hohlkörperelemente so angebracht werden, dass die zweite Breitseite 3 direkt an der Oberseite des Blechteils 280 anliegt, sich jedoch nicht oder im Wesentlichen nicht in das Blechteil eingräbt, ist eine Kerbwirkung nicht zu befürchten, so dass sich ein gutes Ermüdungsverhalten dank eines guten Ermüdungswiderstands auch bei dynamischen Lasten ergibt. Obwohl die Hohlkörperelemente in Draufsicht quadratisch sind, ist an sich keine besondere Orientierung der Matrize gegenüber dem jeweils verwendeten Setzkopf erforderlich da der Stanzabschnitt in Draufsicht kreisrund und daher orientierungsfrei ist. Es muss nur dafür gesorgt werden, dass der Setzkopf und die Matrize koaxial zueinander und zu der Längsachse 226 des Hohlkörperelements liegen. Bei Anbringung eines weiteres Bauteils an einem Zusammenbauteil gemäß Fig. 7A oder 7B wird das weitere Bauteil üblicherweise unten am Blechteil durch eine Schraube (nicht gezeigt) befestigt, die von unten kommend in das Gewinde eingeschraubt wird. Hierdurch wird durch Anziehen der Schraube die Verbindung zwischen dem Hohlkörperelement 200 und dem Blechteil verstärkt.

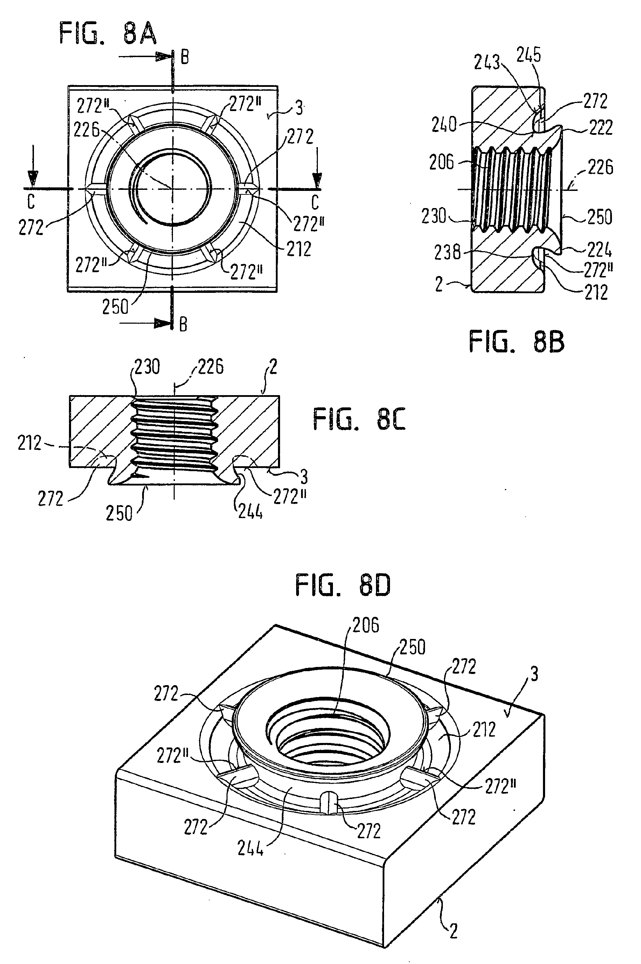

Ferner ist darauf hinzuweisen, dass Verdrehsicherungsrippen denkbar wären, die in radialer Richtung die Ringvertiefung 212 überqueren bzw. diese überbrücken, wie beispielsweise in den Fig. 8A-8D, Fig. 9A-9D oder Fig. 10A-10D gezeigt. Solche Verdrehsicherungsrippen können bündig mit der Breitseite 3 liegen (Fig. 8A-8D) oder vertieft innerhalb der Ringvertiefung vorliegen (solche Verdrehsicherungsmerkmale sind in den Zeichnungen nicht gezeigt).

Bei der Ausführungsform gemäß Fig. 8A-8D liegen die freien Oberseiten der Verdrehsicherungsrippen, die mit 272" angedeutet sind, in der gleichen Ebene, wie die Fläche der Breitseite 3 außerhalb der Ringvertiefung 212. Die Seiten 272" können aber auch von der Breitseite 3 zurück versetzt angeordnet werden. Da die Verdrehsicherungsrippen die Ringvertiefung 212 überbrücken, sind sie auch an der Seite des ringförmigen Stanzabschnitts 222 im Bereich der Hinterschneidung 244 zu finden.

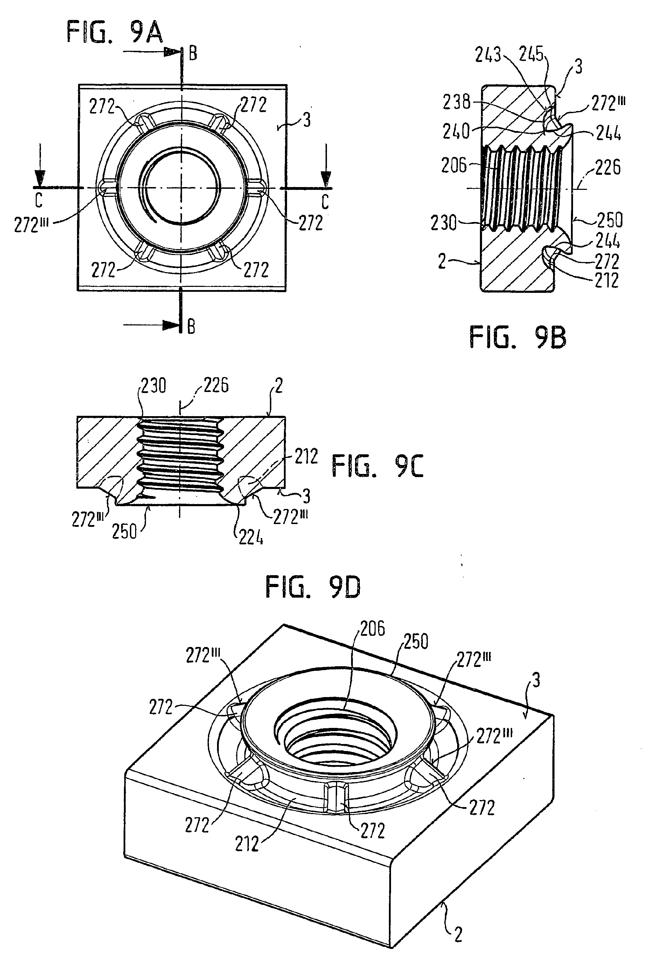

Die Fig. 9A-9C zeigen eine weitere Variante, bei der die Verdrehsicherungsmerkmale die Form von Verdrehsicherungsrippen aufweisen, die sich in radialer Richtung über Ringvertiefung 212 erstrecken, nur sind die Oberseiten der 272"' der Verdrehsicherungsrippen 272 der Ausführung gemäß Fig. 9A-9D schräg gestellt, so dass sie in Richtung auf den Stanzabschnitt 222 gehend ansteigen und daher sich auch nicht nur in radialer Richtung über die Ringvertiefung erstrecken und diese überbrücken, sondern auch in axialer Richtung an der Hinterschneidung 244 des Stanzabschnitts 222 über eine erhebliche Länge bzw. in der vollen Länge der Hinterschneidung 244 sich erstrecken.

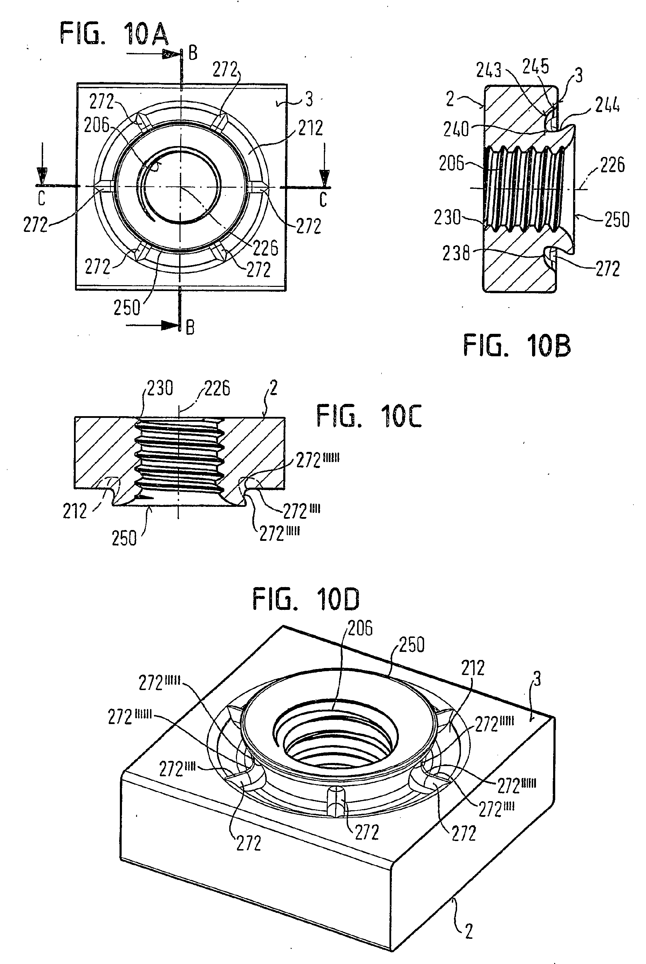

Die Fig. 10A-10D zeigen eine Ausführungsform, die der der Fig. 9A-9D sehr ähnlich ist, nur sind hier die Verdrehsicherungsrippen abgewinkelt, so dass sie einen radialen Anteil 272"" und einen axialen Anteil 272""', die miteinander über einen Radius 272""" übergehend sind und daher insgesamt die besprochene abgewinkelte Form aufweisen.

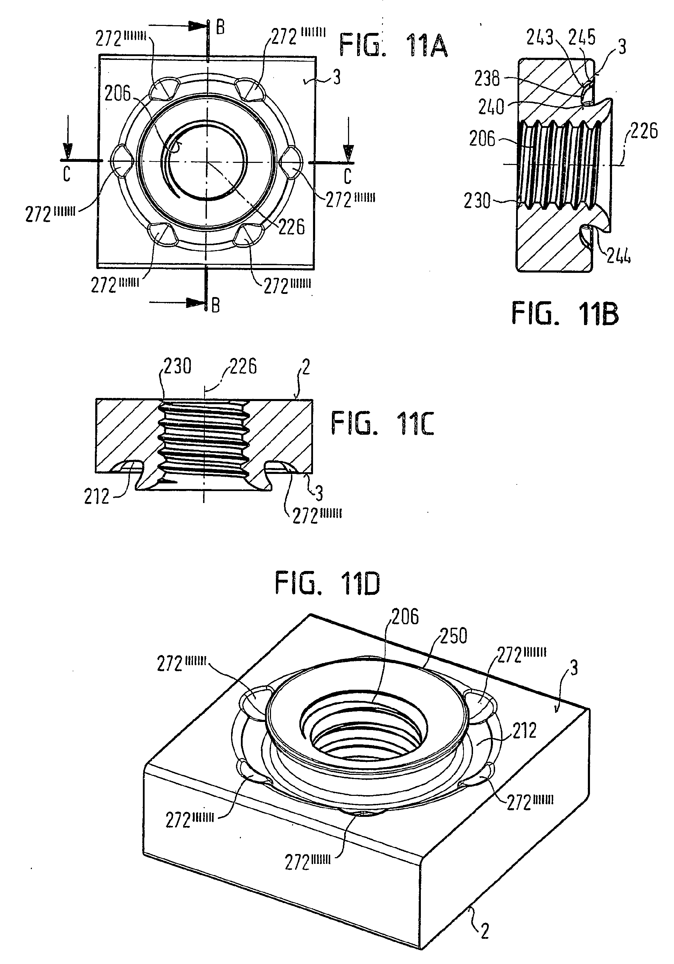

Die Fig. 11A-11D zeigen eine andere Art von Verdrehsicherungsmerkmalen, hier in Form von Vertiefungen 272"""' oder Nuten, die in der schräg gestellten Seitenwand der Ringvertiefung 212 ausgebildet sind, wobei die Vertiefungen 272"""' hier in Draufsicht eine in etwa schalenartige Form aufweisen. Auch andere Formen der Vertiefungen sind denkbar, beispielsweise lang gezogene Nuten, die im Bereich der Breitseite 3 schmaler ausgebildet sind.

Schließlich zeigen die Fig. 12A-12D eine etwas andere Form eines erfindungsgemäßen Hohlkörperelements.

Der wesentliche Unterschied bei der Formgebung des Hohlkörperelements der Ausführung gemäß Fig. 12A-12D ist darin zu sehen, dass die Ringvertiefung hier eine polygonale Gestalt 212' aufweist, und zwar im konkreten Fall eine quadratische Gestalt in Draufsicht, wobei die Ringvertiefung eine entsprechende Anzahl, d.h. vier, schräg gestellte Flächen 400, 402, 404 und 406 aufweist, die mittels Radien 408, 410, 412 und 414 ineinander übergehen. An der tiefsten Stelle der in Draufsicht polygonalen Ringvertiefung 212' befindet sich ein Flächenbereich, der durch vier Eckbereiche 416, 418, 420 und 422 definiert ist und in einer Ebene senkrecht zur mittleren Längsachse 226 des Elements angeordnet ist. Der Stanzabschnitt 222 geht über einen Radius 424 in diese Eckbereiche über, wobei der Radius an der radial äußersten Stelle einen Durchmesser aufweist, der geringfügig größer ist, als die maximale Querabmessung des durch die vier Ecken 416, 418, 420 und 422 gebildeten Flächenbereiches, so dass dieser Radius letztendlich in die unterste Seite der vier schräg gestellten Flächen übergeht. Alle dünne parallele Linien wie 426, 426' und 426" zeigen Radien bzw. gerundete Flächen die unter anderem für einen sanfte Biegung des Blechteils sorgen.

Bei dieser Ausführungsform ist es nicht erforderlich, getrennte Verdrehsicherungsrippen vorzusehen, da die polygonale Form der Ringvertiefung 212' selbst für die erforderliche Verdrehsicherheit sorgt. Diese Ausführung ist auch vorteilhaft, weil die schräg gestellten Flächen und auch die Eckbereiche im Bodenbereich der Ringvertiefung zu der Anlagefläche des Elements gehören, so dass mit entsprechend niedrigen Flächenpressungen am Blechteil gearbeitet werden kann und die Gefahr des Nachsitzens des Elements nicht gegeben ist. Dennoch können hohe Verdrehsicherungswerte erreicht werden, wie auch ein hoher Herausziehwiderstand.

Die gerundeten Bereiche zwischen den schräg gestellten Flächen haben auch den Vorteil, dass an diesen Stellen im Blechteil keine ausgeprägten scharfen Merkmale vorliegen, die zu Ermüdung führen können, insbesondere bei dynamischer Belastung des Bauteils. Da der Stanzabschnitt 222, wie bei den anderen Ausführungsformen, ein kreisrundes Loch im Blechteil erzeugt, sind auch hier keine Spannungskonzentrationen zu erwarten, die im Betrieb zu Ermüdungsrissen führen können. Bei der Anbringung des Hohlkörperelements an ein Blechteil wird das Element zumindest im Wesentlichen nicht verformt, eine Verformung ist unerwünscht, und das Blechteil wird durch eine geeignete komplementäre Form der Matrize in die quadratischen Vertiefung 212' in dem Bereich um den Stanzabschnitt 222 herum und vollständig in Anlage mit diesem Stanzabschnitt um den Stanzabschnitt herum gebracht.

Bei allen Ausführungsformen der Fig. 8A-8D bis Fig. 12A-12D ist das Hohlkörperelement an der ersten Breitseite 2 plan ausgebildet, d.h. mit einer Stirnseite, die senkrecht zur mittleren Längsachse 226 des Elements liegt, entsprechend der bisherigen Ausführungsform der Fig. 5A-5N. Es ist aber durchaus denkbar, dass die entsprechende Stirnseite bei den Ausführungsformen gemäß Fig. 8A-8D bis Fig. 12A-12D ähnlich der Ausführung gemäß Fig. 6D ausgebildet sein könnten. Bei den Fig. 12A-12D bedeutet dies, dass anstelle einer kreisringförmigen Erhebung wie in Fig. 6D gezeigt, die Erhebung dann eine entsprechende polygonale Form aufweisen wird, hier eine quadratische Form.

Wenn in dieser Anmeldung von einer polygonalen Gestalt die Rede ist, so umfasst dies auf jeden Fall Polygone mit drei bis zwölf Polygonalflächen, d.h. schräg gestellte Flächen.

Bei der Ausführungsform gemäß Fig. 12A-12D wie gezeigt, findet im Bereich der in Draufsicht quadratischen Vertiefung eine erhebliche Materialverdrängung statt, so dass es hier durchaus möglich ist, den hohlzylindrischen Vorsprung, der durch Abflachung in den Stanzabschnitt 222 überführt wird, allein durch Materialverdrängung von der zweiten Breitseite 3 des Hohlkörperelements aus zu erreichen, d.h. es ist nicht erforderlich, im ersten Schritt des Herstellungsverfahrens ein Durchsetzverfahren durchzuführen, bei dem Material von der ersten Breitseite 2 aus verschoben wird. D.h. der erste Herstellungsschritt a) gemäß Anspruch 1 kann hier durch einen Formvorgang ersetzt werden, bei dem der hohlzylindrische Vorsprung 210 allein durch Materialverdrängung aus dem Bereich der in Draufsicht polygonalen Ringvertiefung und im Bereich des Hohlraums des hohlzylindrischen Vorsprungs 210 erfolgt. Beim anschließenden Lochvorgang wird dann der so gebildete Körper von der ersten Breitseite 2 ausgehend bis zum Boden 216 des Hohlraums 232 durchgelocht.

Obwohl die vorliegende Erfindung für die Herstellung von im Außenumriss rechteckigen oder quadratischen Elementen gedacht ist, könnte sie auch zur Herstellung von im Außenumriss polygonalen, ovalen oder kreisrunden Elementen oder von solchen mit einer anderen Form verwendet werden, sofern die verwendeten Werkzeuge ausgelegt sind, um aus dem Profilstreifen die erwünschte Umrissform herzustellen, beispielsweise durch die Verwendung von entsprechend gestalteten Stanzwerkzeugen.

Die Ausbildung der Ringvertiefung 212 muss nicht unbedingt gleichzeitig mit dem Durchsetzvorgang erfolgen, sondern könnte mit dem Lochvorgang oder mit dem Abflachvorgang kombiniert werden, d.h. die Lochstempel 84, 86 bzw. die Abflachstempel 88, 90 müssten in diesem Fall eine entsprechende Formgebung aufweisen.

Es nicht notwendig, die Hohlkörperelemente im Folgeverbundwerkzeug voneinander zu trennen, sondern das Profil kann nach Herstellung der allgemeinen Form der Hohlkörperelemente in Abschnitten oder in wieder aufgewickelter Form beibehalten bzw. verwendet werden, wobei eine Vereinzelung in einzelne Hohlkörperelemente erst dann stattfindet, wenn das Profil in einem Setzkopf zur Anbringung der Hohlkörperelemente an einem Bauteil verwendet wird.

Bei allen Ausführungsformen können als Beispiel für den Werkstoff des Profils und der daraus hergestellten Funktionselemente alle Materialien genannt werden, die im Rahmen der Kaltverformung die Festigungswerte der Klasse 8 gemäß ISO-Standard oder höher erreichen, beispielsweise eine 35B2-Legierung gemäß DIN 1654. Die so gebildeten Befestigungselemente eignen sich u.a. für alle handelsüblichen Stahlwerkstoffe für ziehfähige Blechteile wie auch für Aluminium oder dessen Legierungen. Auch können Aluminiumlegierungen, insbesondere solche mit hoher Festigkeit, für das Profil bzw. die Funktionselemente benutzt werden, z.B. AlMg5. Auch kommen Profile bzw. Funktionselemente aus höherfesten Magnesiumlegierungen wie bspw. AM50 in Frage.

## Patentansprüche

1. Verfahren zum Herstellen von Hohlkörperelementen (200), wie Mutterelemente, zur Anbringung an üblicherweise aus Blech (280) bestehenden Bauteilen, insbesondere zur Herstellung von Hohlkörperelementen mit einem zumindest im Wesentlichen quadratischen oder rechteckigen Außenumriss (202), durch Ablängung einzelner Elemente von einem in Form einer Profilstange (1) oder eines Wickels vorliegenden Profils nach vorheriger Stanzung von Löchern (204) in das Profil, gegebenenfalls mit anschließender Ausbildung eines Gewindezylinders (206) unter Anwendung eines Folgeverbundwerkzeugs (10) mit mehreren Arbeitsstationen (A, B, C, D), in denen jeweilige Bearbeitungen durchgeführt werden,
**gekennzeichnet** t durch die folgenden Schritte:
a) dass in einem ersten Schritt ausgehend von einem im Querschnitt rechteckigen Profil (1) ein Durchsetzvorgang durchgeführt wird, der zu einer zylindrischen Vertiefung (208) an einer ersten Breitseite (2) des Profils und einem hohlzylindrischen Vorsprung (210) an einer zweiten der ersten Breiteseite (2) gegenüber liegenden Breitseite (3) des Profils führt, der von einer ringförmigen Vertiefung (212) umgeben ist,
b) dass in einem zweiten Schritt ein zwischen dem Boden (214) der zylindrischen Vertiefung und dem Boden (216) des hohlzylindrischen Vorsprungs (210) verbleibender Steg (218) zur Ausbildung eines durchgehenden Loches (204) durchlocht bzw. herausgestanzt wird,
c) dass in einem dritten Schritt, der gegebenenfalls mit dem Schritt b) kombiniert werden kann, der hohlzylindrische Vorsprung (210) an seinem freien Stirnende zur Ausbildung eines auf der Außenseite hinterschnittenen Stanzabschnitts (222) abgeflacht bzw. gequetscht wird, wonach die Hohlkörperelemente (200) vom Profil abgetrennt und gegebenenfalls mit Gewinde (206) versehen werden.

2. Verfahren nach Anspruch 1,
**dadurch gekennzeichnet,**
**dass** beim Durchsetzvorgang des Schrittes a) der Durchmesser der zylindrischen Vertiefung (208) und der innere Durchmesser des hohlzylindrischen Vorsprungs (210) zumindest im Wesentlichen gleich ausgeführt werden.

3. Verfahren nach Anspruch 1 oder Anspruch 2,
**dadurch gekennzeichnet,**
**dass** beim Durchsetzvorgang des Schrittes a) oder beim Lochvorgang des Schritts b) oder beim Abflachvorgang des Schritts c) die Mündung der zylindrischen Vertiefung (208) an der ersten Breitseite des Profils mit einer gerundeten oder angefasten Einlaufkante (230) ausgeführt ist.

4. Verfahren nach einem der vorhergehenden Ansprüche,
**dadurch gekennzeichnet,**
**dass** beim Durchsetzvorgang des Schrittes a) oder beim Lochvorgang des Schritts b) oder beim Abflachvorgang des Schritts c) die Mündung des hohlzylindrischen Vorsprungs (210) an ihrem freien Ende mit einer gerundeten oder angefasten Auslaufkante (234) versehen ist.

5. Verfahren nach einem der vorhergehenden Ansprüche,
**dadurch gekennzeichnet,**
**dass** bei der Durchlochung des Steges gemäß Schritt b) ein Loch (204) mit einem Durchmesser erzeugt wird, der dem Durchmesser der zylindrischen Vertiefung (208) und dem inneren Durchmesser des hohlzylindrischen Vorsprungs (210) zumindest im Wesentlichen entspricht.

6. Verfahren nach einem der vorhergehenden Ansprüche,
**dadurch gekennzeichnet,**
**dass** beim Durchsetzvorgang des ersten Schrittes a) das freie Ende des hohlzylindrischen Vorsprungs (210) außen mit einer Fase (236) versehen wird.

7. Verfahren nach einem der vorhergehenden Ansprüche,
**dadurch gekennzeichnet,**
**dass** beim Durchsetzvorgang des ersten Schrittes a) die Ringvertiefung (212) mit einem ringförmigen Bodenbereich (238) versehen wird, der zumindest in etwa in einer Ebene parallel zu der ersten und zweiten Breitseite (2, 3) steht, auf der radial inneren Seite mit einem zumindest im Wesentlichen gerundeten Übergang (240) in die Außenseite des hohlzylindrischen Vorsprungs (210) und auf der radial äußeren Seite in eine konusförmige Fläche (242) übergeht.

8. Verfahren nach Anspruch 7,
**dadurch gekennzeichnet,**
**dass** die konusförmige Fläche (242) der Ringvertiefung (212) einen eingeschlossenen Konuswinkel im Bereich zwischen 60 und 120°, vorzugsweise bei etwa 90° aufweist.

9. Verfahren nach einem der vorhergehenden Ansprüche,
**dadurch gekennzeichnet,**
**dass** der Übergang vom ringförmigen Bereich (240) der Ringvertiefung in die konusförmige Fläche (242) gerundet wird.

10. Verfahren nach einem der Ansprüche 7 bis 9,
**dadurch gekennzeichnet,**
**dass** der Auslauf der Konusfläche (242) der Ringvertiefung in die zweite Breitseite (3) des Profils gerundet wird.

11. Verfahren nach einem der vorhergehenden Ansprüche,
**dadurch gekennzeichnet,**
**dass** bei Herstellung der Hinterschneidung (244) diese durch einen zylindrischen Teil des hohlzylindrischen Vorsprungs (210) gebildet ist, der in etwa in der Höhe der zweiten Breitseite (3) des Profils in einen bei Durchführung des Schrittes c) verdickten Bereich (222) des hohlzylindrischen Vorsprungs übergeht, der zumindest im Wesentlichen über die zweite Breitseite des Profils vorsteht.

12. Verfahren nach Anspruch 11,
**dadurch gekennzeichnet,**
**dass** der verdickte Bereich (222) des hohlzylindrischen Vorsprungs zumindest im Wesentlichen konusförmig ausgeführt wird und von der ersten und zweiten Breitseite (2, 3) weg divergiert.

13. Verfahren nach Anspruch 12,
**dadurch gekennzeichnet,**
**dass** der Konuswinkel des verdickten Bereichs (222) des hohlzylindrischen Vorsprungs im Bereich zwischen 30° und 70°, vorzugsweise bei etwa 50° liegt.

14. Verfahren nach einem der vorhergehenden Ansprüche,
**dadurch gekennzeichnet,**
**dass** nach dem Abflachungsvorgang der hohlzylindrische Vorsprung (210) an seinem freien Ende außen in einer möglichst scharfkantigen Stanzkante (250) endet.

15. Verfahren nach einem der vorhergehenden Ansprüche,
**dadurch gekennzeichnet,**
**dass** die Ringvertiefung (212) mit einem Außendurchmesser ausgeführt ist, der nur etwas kleiner ausgeführt ist als die kleinste Querabmessung des in Draufsicht rechteckigen Hohlkörperelements (200), wodurch die Ringvertiefung mit der zweiten Breitseite des Profils an den engsten Stellen in der Ebene der zweiten Breitseite verbleibende Stege (284, 286) mit einer Breite im Bereich von 0,25 bis 1 mm, vorzugsweise von etwa 0,5 mm bildet.

16. Verfahren nach einem der vorhergehenden Ansprüche,
**dadurch gekennzeichnet,**
**dass** beim Durchsetzvorgang gemäß Schritt a) auf der ersten Breitseite (2) des Profils um die zylindrische Vertiefung (208) herum eine ringförmige Erhebung (260) ausgebildet wird.

17. Verfahren nach einem der vorhergehenden Ansprüche,
**dadurch gekennzeichnet,**
**dass** beim Durchsetzvorgang gemäß Schritt a) Verdrehsicherungsmerkmale (272) außen am hohlzylindrischen Vorsprung (210) und/oder innen im Bereich der Ringvertiefung (212) um den hohlzylindrischen Vorsprung (210) herum ausgebildet werden.

18. Verfahren nach Anspruch 17,
**dadurch gekennzeichnet,**
**dass** die Verdrehsicherungsmerkmale durch Rippen (272) und/oder Nuten an der radial äußeren Seite des hohlzylindrischen Vorsprungs (210) gebildet werden.

19. Verfahren nach Anspruch 17 oder 18,
**dadurch gekennzeichnet,**
**dass** die Verdrehsicherungsmerkmale durch Rippen (272) gebildet werden, die sich in axialer Richtung erstrecken und die Hinterschneidung (244) des hohlzylindrischen Vorsprungs (210) überbrücken.

20. Verfahren nach Anspruch 19,
**dadurch gekennzeichnet,**
**dass** die Verdrehsicherungsrippen (272) eine radiale Breite haben, die zumindest im Wesentlichen im Bereich zwischen 40 % und 90% der maximalen radialen Tiefe der Hinterschneidung (244) entspricht.

21. Verfahren nach Anspruch 17,
**dadurch gekennzeichnet,**
**dass** Verdrehsicherungsmerkmale in Form von sich radial erstreckenden Rippen, die die Ringvertiefung überbrücken, im Schritt a) ausgebildet werden.

22. Verfahren nach Anspruch 17 bzw. 21,
**dadurch gekennzeichnet,**
**dass** die Verdrehsicherungsmerkmale in Form von schräg gestellten Verdrehsicherungsrippen ausgebildet werden, die sich in radialer Richtung über die Ringvertiefung und in axialer Richtung am hohlzylindrischen Vorsprung, d.h. an der späteren Hinterschneidung des Stanzabschnitts, entlang erstrecken.

23. Verfahren nach Anspruch 17 bzw. 21,
**dadurch gekennzeichnet,**
**dass** die Verdrehsicherungsmerkmale in Form von Verdrehsicherungsrippen ausgebildet werden, die sich in radialer Richtung über die Ringvertiefung und in axialer Richtung am hohlzylindrischen Vorsprung, d.h. an der späteren Hinterschneidung des Stanzabschnitts, entlang erstrecken.

24. Verfahren nach Anspruch 17,
**dadurch gekennzeichnet,**
**dass** Verdrehsicherungsmerkmale in Form von Vertiefungen ausgebildet werden, und zwar in Schritt a), Schritt b) oder Schritt c) bzw. Vertiefungen gebildet sind, die in der schrägestellten Fläche der Ringvertiefung angeordnet werden.

25. Verfahren nach Anspruch 1,
**dadurch gekennzeichnet** t
dass abweichend vom Anspruch 1 im Schritt a) ebenfalls ausgehend von einem im Querschnitt rechteckigen Profil (1) ein Formvorgang durchgeführt wird, bei dem an der ersten Breitseite (2) des Profils (1) wahlweise keine zylindrische Vertiefung (208) vorgesehen ist, der jedoch an der zweiten Breitseite (3) des Profils (1) zu einer in Draufsicht vorzugsweise polygonalen, insbesondere quadratischen Vertiefung (212') an der zweiten Breitseite (3) des Profils führt, die den hohlzylindrischen Vorsprung (210) umgibt, der teilweise aus dem durch die Ausbildung der Vertiefung (212') verdrängten Material und teilweise aus dem durch die Ausbildung des Hohlraums des hohlzylindrischen Vorsprungs (210) verdrängten Material gebildet wird, wobei die Vertiefung (212') mit einer bzw. mit mehreren zu der mittleren Längsachse des Hohlkörperelements schräg gestellten Ringfläche bzw. - flächen versehen wird und im zweiten Schritt b) das Material zwischen der ersten Breitseite (2) des Profils (1) und dem Boden (216) des hohlzylindrischen Vorsprungs (210) zur Ausbildung eines durchgehenden Loches (204) durchlocht bzw. herausgestanzt wird.

26. Hohlkörperelement zur Anbringung an einem üblicherweise aus Blech bestehenden Bauteil (280) mit einem zumindest im Wesentlichen quadratischen oder rechteckigen Außenumriss, mit einer ersten Breitseite (2) und einer zweiten Breitseite (3), mit einem eine Hinterschneidung (244) aufweisenden Stanzabschnitt (222), der über die zweite Breitseite (3) vorsteht und von einer Ringvertiefung (212') in der zweiten Breitseite umgeben ist sowie mit einem Loch (204), das sich von der ersten Breitseite (2) durch den Stanzabschnitt (222) hindurch erstreckt, wobei das Loch gegebenenfalls einen Gewindezylinder (206) aufweist,
**dadurch gekennzeichnet,**
**dass** die Ringvertiefung (212') in Draufsicht polygonal und insbesondere quadratisch ist, und dass die Ringvertiefung (212') mit mehreren zu der mittleren Längsachse des Hohlkörperelements schräg gestellten Flächen versehen ist, die in der Richtung von der ersten Breitseite zur zweiten Breitseite betrachtet von der mittleren Längsachse des Hohlkörperelements weg geneigt sind.

27. Folgeverbundwerkzeug zum Herstellen von Hohlkörperelementen (200), wie Mutterelemente, zur Anbringung an üblicherweise aus Blech (280) bestehenden Bauteilen, insbesondere zur Herstellung von Hohlkörperelementen mit einem zumindest im Wesentlichen quadratischen oder rechteckigen Außenumriss (202), durch Ablängung einzelner Elemente von einem in Form einer Profilstange oder eines Wickels vorliegenden Profils (1) nach vorheriger Stanzung von Löchern (204) in das Profil, gegebenenfalls mit anschließender Ausbildung eines Gewindezylinders (206) unter Anwendung eines Folgeverbundwerkzeugs mit mehreren Arbeitsstationen (A, B, C, D), wobei in jeder Arbeitsstation für das Profil bzw. für mehrere nebeneinander angeordnete Profile jeweils zwei Bearbeitungen für jeden Hub des Folgeverbundwerkzeugs gleichzeitig durchgeführt werden,
**dadurch gekennzeichnet,**
**dass** in einer ersten Arbeitsstation (A) zur Herstellung eines zylindrischen Vorsprungs an der zweiten Breitseite ein Durchsetzvorgang, in einer zweiten Arbeitsstation (B) mittels eines zylindrischen Lochstempels ein Lochvorgang, in einer dritten Arbeitsstation (C) zur Herstellung einer Hinterschneidung des zylindrischen Vorsprungs ein Abflachvorgang und in einer vierten Arbeitsstation (D) die Vereinzelung von jeweils zwei Hohlkörperelementen von dem bzw. von jedem Profil mittels des Abschlagstempels durchgeführt wird.

## Claims

1. A method for the manufacture of hollow body elements (200) such as nut elements for attachment to components typically comprising sheet metal (280), in particular for the manufacture of hollow body elements, having an at least substantially square or rectangular outline (202) by cutting individual elements to length from a section present in the form of a section bar (1) or of a coil after prior punching of apertures (204) into the section, optionally with subsequent formation of a threaded cylinder (206) using a progressive tool (10) having a plurality of working stations (A, B, C, D) in which respective operations are carried out,
**characterized by** the following steps:
a) in a first step, starting from a section (1) rectangular in cross-section, an upsetting process is carried out which leads to a cylindrical recess (208) at a first broad side (2) of the section and to a hollow cylindrical projection (210) at a second broad side (3) of the section opposite to the first broad side (2), the projection being surrounded by a ring-shape recess (202),
b) in a second step, a web (218) remaining between the base (214) of the cylindrical recess and the base (216) of the hollow cylindrical projection (210) is pierced or punched out to form a through-going aperture (204),
c) in a third step, which can optionally be combined with step b), the hollow cylindrical projection (210) is flattened or crushed at its free end face for the formation of a punching section (222) undercut at the outer side, whereafter the hollow body elements (200) are separated from the section and are optionally provided with thread (206).

2. A method in accordance with claim 1,
**characterized in that**,
during the upsetting operation of step a), the diameter of the cylindrical recess (208) and the inner diameter of the hollow cylindrical projection (210) are made at least substantially the same.

3. A method in accordance with claim 1 or claim 2,
**characterized in that**,
during the upsetting process of step a) or during the piercing process of step b) or during the flattening process of step c), the opening of the cylindrical recess (208) is executed at the first broad side of the section with a rounded or chamfered run-in edge (230).

4. A method in accordance with any one of the preceding claims,
**characterized in that**,
during the upsetting process of step a) or during the piercing process of step b) or during the flattening process of step c), the opening of the hollow cylindrical projection (210) is provided at its free end with a rounded or chamfered run-out edge (234).

5. A method in accordance with any one of the preceding claims,
**characterized in that**,
during the piercing of the web in accordance with step b), an aperture (204) is produced with a diameter which at least substantially corresponds to the diameter of the cylindrical recess (208) and to the inner diameter of the hollow cylindrical projection (210).

6. A method in accordance with any one of the preceding claims,
**characterized in that**,
during the upsetting process of the first step a), the free end of the hollow cylindrical projection (210) is provided at the outside with a chamfer (236).

7. A method in accordance with any one of the preceding claims,
**characterized in that**,
during the upsetting process of the first step a), the recess (212) is provided with a ring-like base region (238) which stands at least approximately in a plane parallel to the first and second broad sides (2, 3), which is provided at the radially inner side with an at least substantially rounded transition (240) into the outer side of the hollow cylindrical projection (210) and which merges at the radially outer side into a conical surface (242).

8. A method in accordance with claim 7,
**characterized in that**
the conical surface (242) of the ring recess (212) has an included cone angle in the range between 60 and 120°, preferably of approximately 90°.

9. A method in accordance with any one of the preceding claims,
**characterized in that**
the transition from the ring-shaped region (240) of the ring recess into the conical surface (242) is rounded.

10. A method in accordance with any one of the claims 7 to 9,
**characterized in that**
the run-out of the conical surface (242) of the ring recess into the second broad side (3) of the section is rounded.

11. A method in accordance with any one of the preceding claims,
**characterized in that**,
during the manufacture of the undercut (244), this is formed by a cylindrical part of the hollow cylindrical projection (210) which merges approximately at the level of the second broad side (3) of the section into a region (222) of the hollow cylindrical projection which is thickened on carrying out the step c) and which at least substantially projects beyond the second broad side of the section.

12. A method in accordance with claim 11,
**characterized in that**
the thickened region (222) of the hollow cylindrical projection is made at least substantially conical and diverges away from the first and second broad sides (2, 3).

13. A method in accordance with claim 12,
**characterized in that**
the cone angle of the thickened region (222) of the hollow cylindrical projection lies in the range between 30° and 70°, preferably at approximately 50°.

14. A method in accordance with any one of the preceding claims,
**characterized in that**,
after the flattening process, the hollow cylindrical projection (210) ends at its free end outwardly in a punching edge (250) which is as sharp-edged as possible.

15. A method in accordance with any one of the preceding claims,
**characterized in that**
the ring recess (212) is executed with an outer diameter which is only made somewhat smaller than the smallest transverse dimension of the hollow body element (200) which is rectangular in plan view, whereby the ring recess forms with the second broad side of the section webs (284, 286) which remain at the narrowest points in the plane of the second broad side with a width in the range from 0.25 to 1 mm, preferably of approximately 0.5 mm.

16. A method in accordance with any one of the preceding claims,
**characterized in that**,
during the upsetting process in accordance with step a) a ring-like raised portion (260) is formed at the first broad side(2) of the section around the cylindrical recess (208).

17. A method in accordance with any one of the preceding claims,
**characterized in that**,
during the upsetting process in accordance with step a) features (272) providing security against rotation are formed outwardly at the hollow cylindrical projection (210) and/or inwardly in the region of the ring recess (212) around the hollow cylindrical projection (210).

18. A method in accordance with claim 17,
**characterized in that**
the features providing security against rotation are formed by ribs (272) and/or by grooves at the radially outer side of the hollow cylindrical projection (210).

19. A method in accordance with claim 17 or 18,
**characterized in that**
the features providing security against rotation are formed by ribs (272) which extend in the axial direction and bridge the undercut (244) of the hollow cylindrical projection (210).

20. A method in accordance with claim 19,
**characterized in that**
the ribs (272) providing security against rotation have a radial width which corresponds at least substantially to between 40 % and 90 % of the maximum radial depth of the undercut (244).

21. A method in accordance with claim 17,
**characterized in that**
the features providing security against rotation are formed in step a) by radially extending ribs which bridge the ring recess.

22. A method in accordance with claim 17 or claim 21,
**characterized in that**
the features providing security against rotation are made in the form of obliquely positioned ribs providing security against rotation which extend in the radial direction across the ring recess and in the axial direction along the hollow cylindrical projection, i.e. along the later undercut of the punching section.

23. A method in accordance with claim 17 or claim 21,
**characterized in that**
the features providing security against rotation are made in the form of ribs providing security against rotation which extend in the radial direction across the ring recess and in the axial direction along the hollow cylindrical projection, i.e. along the later undercut of the piercing section.

24. A method in accordance with claim 17,
**characterized in that**
features providing security against rotation are made in the form of recesses, and indeed in step a), step b) or step c), or **in that** recesses are formed which are arranged in the inclined surface of the ring recess.

25. A method in accordance with claim 1,
**characterized in that**,
in deviation from claim 1, in step a), likewise starting from a section (1) rectangular in cross-section, a forming process is carried out in which optionally no cylindrical recess (208) is provided at the first broad side (2) of the section (1), but which leads at the second broad side (3) of the section (1) to a recess (212') at the second broad side (3) of the section which is preferably polygonal in plan view, in particular square, which surrounds the hollow cylindrical projection (210) which is formed partly from the material displaced by the formation of the recess (212) and partly from the material displaced by the formation of the hollow space of the hollow cylindrical projection (210), with the recess (212') being provided with a ring surface or with a plurality of ring surfaces set obliquely with respect to the central longitudinal axis of the hollow body element and, in the second step b), the material between the first broad side (2) of the section (1) and the base (216) of the hollow cylindrical projection (210) is pierced or punched out for the formation of a through-going aperture (204).

26. A hollow body element for attachment to a component (280) typically comprising sheet metal having an at least substantially square or rectangular outline with a first broad side (2) and a second broad side (3) with a punching section (222) which projects beyond the second broad side (3) and which has an undercut (244) and is surrounded by a ring recess (212') in the second broad side and also with an aperture (204) which extends from the first broad side (2) through the punching section (222), with the aperture optionally having a threaded cylinder (206),
**characterized in that**
the ring recess (212') is polygonal and in particular square in plan view and **in that** the ring recess (212') is provided with a plurality of surfaces set obliquely with respect to the central longitudinal axis of the hollow body element which are inclined away from the central longitudinal axis of the hollow body element, when viewed in the direction from the first broad side to the second broad side.

27. A progressive tool for the manufacture of hollow body elements (200) such as nut elements for attachment to components typically comprising sheet metal (280), in particular for the manufacture of hollow body elements having an at least substantially square or rectangular outline (202) by cutting individual elements to length from a section (1) present in the form of a section bar or a coil after prior punching of apertures (204) into the section, optionally with subsequent formation of a threaded cylinder (206) using a progressive tool with a plurality of working stations (A, B, C, D) wherein in each case two operations are simultaneously carried out for each stroke of the progressive tool in each working station for the section or for a plurality of sections arranged alongside one another,
**characterized in that**
an upsetting process is carried out in a first working station (A) for the manufacture of a cylindrical projection at the second broad side, a piercing process is carried out in a second working station (B) by means of a cylindrical piercing punch, a flattening process is carried out in a third working station (C) for the manufacture of an undercut of the cylindrical projection and the separation of in each case two hollow body elements from the section or from each section is carried out in a fourth working station (D) by means of the cut-off punch.

## Revendications

1. Procédé pour la fabrication d'éléments à corps creux (200), tels que des éléments de type écrou, destinés à être montés sur des composants constitués habituellement en tôle (280), en particulier pour la fabrication d'éléments à corps creux avec un contour extérieur au moins sensiblement carré ou rectangulaire (202), par découpe à longueur d'éléments individuels depuis un profilé qui se présente sous la forme d'une barre profilée (1) ou d'une bobine, après poinçonnage préalable de trous (204) dans le profilé, le cas échéant avec formation successive d'un cylindre à pas de vis (206) en utilisant un outil composite à suivre (10) avec plusieurs postes de travail (A, B, C, D) dans lesquels sont exécutés des usinages respectifs,
**caractérisé par** les étapes suivantes :
a) en partant d'un profilé (1) à section rectangulaire on exécute dans une première étape une opération de traversée, qui mène à un renfoncement cylindrique (208) sur un premier grand côté (2) du profilé et à une saillie cylindrique creuse (210) sur un second grand côté (3), situé à l'opposé du premier grand côté (2), du profilé, qui est entourée par un renfoncement de forme annulaire (212),
b) dans une seconde étape, on perce ou on poinçonne une barrette (218) qui demeure entre le fond (214) du renfoncement cylindrique et le fond (216) de la saillie cylindrique creuse (210), pour réaliser un trou traversant (204),
c) dans une troisième étape, qui peut le cas échéant être combinée avec l'étape b), on aplatit ou on écrase la saillie cylindrique creuse (210) à son extrémité frontale libre pour réaliser une portion poinçonnée (222) en contre-dépouille sur la face extérieure, suite à quoi les éléments à corps creux (200) sont séparés vis-à-vis du profilé et le cas échéant dotés d'un pas de vis (206).

2. Procédé selon la revendication 1,
**caractérisé en ce que** lors de l'opération de traversée de l'étape a) le diamètre du renfoncement cylindrique (208) et le diamètre intérieur de la saillie cylindrique creuse (210) sont réalisés au moins sensiblement égaux.

3. Procédé selon la revendication 1 ou la revendication 2,
**caractérisé en ce que** lors de l'opération de traversée de l'étape a) ou lors de l'opération de perçage de l'étape b), ou lors de l'opération d'aplatissement de l'étape c), l'embouchure du renfoncement cylindrique (208) au niveau du premier grand côté du profilé est réalisée avec une arête d'entrée (230) arrondie ou chanfreinée.

4. Procédé selon l'une des revendications précédentes,
**caractérisé en ce que** lors de l'opération de traversée de l'étape a) ou lors de l'opération de perçage de l'étape b), ou lors de l'opération d'aplatissement de l'étape c), l'embouchure de la saillie cylindrique creuse (210) à son extrémité libre est dotée d'une arête de sortie (234) arrondie ou chanfreinée.

5. Procédé selon l'une des revendications précédentes,
**caractérisé en ce que** lors du perçage de la barrette selon l'étape b), on produit un trou (204) avec un diamètre qui correspond au moins sensiblement au diamètre du renfoncement cylindrique (208) et au diamètre intérieur de la saillie cylindrique creuse (210).

6. Procédé selon l'une des revendications précédentes,
**caractérisé en ce que** lors de l'opération de traversée de la première étape a), l'extrémité libre de la saillie cylindrique creuse (210) est dotée d'un chanfrein (236) à l'extérieur.

7. Procédé selon l'une des revendications précédentes,
**caractérisé en ce que** lors de l'opération de traversée de la première étape a), le renfoncement annulaire (212) est doté d'une zone de fond (238) de forme annulaire, qui se trouve au moins approximativement dans un plan parallèle au premier et au second grand côté (2, 3) et qui se transforme, du côté radialement intérieur, avec une transition (240) au moins sensiblement arrondie, pour donner le côté extérieur de la saillie cylindrique creuse (210) et, du côté radialement extérieur, pour donner une surface de forme conique (242)

8. Procédé selon la revendication 7,
**caractérisé en ce que** la surface de forme conique (242) du renfoncement annulaire (212) présente un angle de cône inclus dans la plage entre 60 et 120 °, de préférence d'environ 90°.

9. Procédé selon l'une des revendications précédentes,
**caractérisé en ce que** la transition de la zone de forme annulaire (240) du renfoncement annulaire vers la surface de forme conique (242) est arrondie.

10. Procédé selon l'une des revendications 7 à 9,
**caractérisé en ce que** la sortie de la surface conique (242) du renfoncement annulaire vers le second grand côté (3) du profilé est arrondie.

11. Procédé selon l'une des revendications précédentes,
**caractérisé en ce que** lors de la réalisation de la contre-dépouille (244), celle-ci est formée par une partie cylindrique de la saillie cylindrique creuse (210), qui se transforme, approximativement à la hauteur du second grand côté (3) du profilé, en une zone (222) épaissie lors de l'exécution de l'étape c), de la saillie cylindrique creuse, qui dépasse au moins sensiblement au-delà du second grand côté du profilé.

12. Procédé selon la revendication 11,
**caractérisé en ce que** la zone épaissie (222) de la saillie cylindrique creuse est réalisée sensiblement en forme de cône et diverge en éloignement du premier et du second grand côté (2, 3).

13. Procédé selon la revendication 12,
**caractérisé en ce que** l'angle du cône de la zone épaissie (222) de la saillie cylindrique creuse est dans une plage entre 30° et 70°, de préférence d'environ 50°.

14. Procédé selon l'une des revendications précédentes,
**caractérisé en ce qu'**après l'opération d'aplatissement, la saillie cylindrique creuse (210) se termine à son extrémité libre à l'extérieur en une arête de poinçonnage (250) présentant une arête aussi vive que possible.

15. Procédé selon l'une des revendications précédentes,
**caractérisé en ce que** le renfoncement annulaire (212) est réalisé avec un diamètre extérieur qui est uniquement légèrement plus petit que la plus petite dimension transversale de l'élément à corps creux rectangulaire en vue de dessus (200), grâce à quoi le renfoncement annulaire forme avec le second grand côté du profilé au niveau des emplacements les plus étroits, des barrettes (284, 286) qui restent dans le plan du second grand côté avec une largeur dans la plage de 0,25 à 1 mm, de préférence d'environ 0,5 mm.

16. Procédé selon l'une des revendications précédentes,
**caractérisé en ce que** lors de l'opération de traversée selon l'étape a) on forme sur le premier grand côté (2) du profilé tout autour du renfoncement cylindrique (208), une surélévation de forme annulaire (260).

17. Procédé selon l'une des revendications précédentes,
**caractérisé en ce que** lors de l'opération de traversée selon l'étape a) on réalise tout autour de la saillie cylindrique creuse (210), des caractéristiques antirotation (272) à l'extérieur sur la saillie cylindrique creuse (210) et/ou à l'intérieur dans la zone du renfoncement annulaire (212).

18. Procédé selon la revendication 17,
**caractérisé en ce que** les caractéristiques antirotation sont formées par des nervures (272) et/ou par des rainures au niveau du côté radialement extérieur de la saillie cylindrique creuse (210).

19. Procédé selon la revendication 17 ou 18,
**caractérisé en ce que** les caractéristiques antirotation sont formées par des nervures (272), qui s'étendent en direction axiale et qui coiffent la contre-dépouille (244) de la saillie cylindrique creuse (210).

20. Procédé selon la revendication 19,
**caractérisé en ce que** les nervures antirotation (272) ont une largeur radiale qui correspond au moins sensiblement à une plage entre 40 % et 90 % de la profondeur radiale maximum de la contre-dépouille (244).

21. Procédé selon la revendication 17,
**caractérisé en ce que** les caractéristiques antirotation sont réalisées dans l'étape a) sous la forme de nervures s'étendant radialement et qui coiffent le renfoncement annulaire.

22. Procédé selon la revendication 17 ou 21,
**caractérisé en ce que** les caractéristiques antirotation sont réalisées sous la forme de nervures antirotation disposées en oblique, qui s'étendent en direction radiale par-dessus le renfoncement annulaire et en direction axiale au niveau de la saillie cylindrique creuse, c'est-à-dire le long de la contre-dépouille ultérieure du tronçon poinçonné.

23. Procédé selon la revendication 17 ou 21,
**caractérisé en ce que** les caractéristiques antirotation sont réalisées sous la forme de nervures antirotation, qui s'étendent en direction radiale par-dessus le renfoncement annulaire et en direction axiale au niveau de la saillie cylindrique creuse, c'est-à-dire le long de la contre-dépouille ultérieure du tronçon poinçonné.

24. Procédé selon la revendication 17,
**caractérisé en ce que** les caractéristiques antirotation sont réalisées sous la forme de renfoncements, et ceci du fait que l'on réalise dans l'étape a), l'étape b) ou l'étape c) des renfoncements qui sont agencés dans la surface oblique du renfoncement annulaire.

25. Procédé selon la revendication 1,
**caractérisé en ce que**
à la différence de la revendication 1, on exécute dans l'étape a) également en partant d'un profilé (1) à section transversale rectangulaire, une opération de formage dans laquelle on ne prévoit au choix aucun renfoncement cylindrique (208) au niveau du premier grand côté (2) du profilé (1), qui mène cependant au niveau du second grand côté (3) du profilé (1) à un renfoncement (212'), de préférence polygonal et en particulier carré en vue de dessus, au niveau du second grand côté (3) du profilé, qui entoure la saillie cylindrique creuse (210), laquelle est partiellement formée du matériau refoulé par la réalisation du renfoncement (212') et partiellement du matériau refoulé par la formation de la cavité de la saillie cylindrique creuse (210), le renfoncement (212') étant doté d'une ou de plusieurs surfaces annulaires disposées en oblique par rapport à l'axe longitudinal médian de l'élément à corps creux, et dans une seconde étape b) le matériau entre le premier grand côté (2) du profilé (1) et le fond (216) de la saillie de forme cylindrique creuse (210) est percé ou poinçonné pour la réalisation d'un trou traversant (104).

26. Élément à corps creux destiné à être monté sur un composant (280) constitué habituellement en tôle avec un contour extérieur au moins sensiblement carré ou rectangulaire, comportant un premier grand côté (2) et un second grand côté (3), comprenant un tronçon de poinçonnage (222) présentant une contre-dépouille (244), qui dépasse au-delà du second grand côté (3) et qui est entouré par un renfoncement annulaire (212') dans le second grand côté, et comportant un trou (204) qui s'étend à travers le tronçon poinçonné (222) depuis le premier grand côté (2), dans lequel le trou comporte le cas échéant un cylindre à pas de vis (206),
**caractérisé en ce que** le renfoncement annulaire (212') est en vue de dessus polygonal et en particulier carré, et **en ce que** le renfoncement annulaire (212') est doté de plusieurs surfaces disposées en oblique par rapport à l'axe longitudinal médian de l'élément à corps creux, ces surfaces étant inclinées en éloignement de l'axe longitudinal médian de l'élément à corps creux lorsqu'on les considère en direction du premier grand côté vers le second grand côté.

27. Outil composite à suivre pour la production d'éléments à corps creux (200), comme des éléments de type écrou, destinés à être montés sur des composants constitués habituellement en tôle (280), en particulier pour la production d'éléments à corps creux avec un contour extérieur au moins sensiblement carré ou rectangulaire (202), par découpe à longueur d'éléments individuels depuis un profilé (1) qui se présente sous la forme d'une tige profilée ou d'une bobine, après poinçonnage préalable de trous (204) dans le profilé, le cas échéant avec réalisation successive d'un cylindre à pas de vis (206) en utilisant un outil composite à suivre comprenant plusieurs postes de travail (A, B, C, D), dans lequel dans chaque poste de travail on exécute pour le profilé ou respectivement pour plusieurs profilés agencés les uns à côté des autres, à deux usinages respectifs simultanés pour chaque course de l'outil composite à suivre,
**caractérisé en ce que**
dans un premier poste de travail (A) destiné à la réalisation d'une saillie cylindrique sur le second grand côté, on exécute une opération de traversée, dans un second poste de travail (B) on exécute une opération de perçage au moyen d'un poinçon de perçage et, dans un troisième poste de travail (C) destiné à produire une contre-dépouille de la saillie cylindrique, on exécute une opération d'aplatissement, et dans un quatrième poste de travail (D) en exécute la séparation de deux éléments à corps creux respectivement depuis le profilé ou depuis chaque profilé au moyen du poinçon de découpe.
